Europäisches Patentamt

European Patent Office

Office européen des brevets

(19)

(11) **EP 1 688 874 A1**

(12) **EUROPEAN PATENT APPLICATION**
published in accordance with Art. 158(3) EPC

(43) Date of publication:
09.08.2006 Bulletin 2006/32

(51) Int Cl.:
*G06Q 10/00* (2006.01)

(21) Application number: 04721305.3

(22) Date of filing: 17.03.2004

(86) International application number:
PCT/JP2004/003545

(87) International publication number:
WO 2005/041094 (06.05.2005 Gazette 2005/18)

(84) Designated Contracting States:
AT BE BG CH CY CZ DE DK EE ES FI FR GB GR
HU IE IT LI LU MC NL PL PT RO SE SI SK TR

(30) Priority: 23.10.2003 JP 2003396346
06.02.2004 JP 2004030303

(71) Applicant: **Intellectual Property Bank Corp.**
**Tokyo 105-0001 (JP)**

(72) Inventors:
• **MASUYAMA, Hiroaki**
 **Toyonaka-shi, Osaka 5600054 (JP)**
• **MIYAMOTO, Kaoru**
 **Toshima-ku, Tokyo 1710051 (JP)**

(74) Representative: **Style, Kelda Camilla Karen et al**
 **Page White & Farrer,**
 **54 Doughty Street**
 **London WC1N 2LS (GB)**

(54) **ENTERPRISE EVALUATION DEVICE AND ENTERPRISE EVALUATION PROGRAM**

(57) There are provided an enterprise evaluation device and an enterprise evaluation program for reporting a sales amount and an analysis result of intellectual property of an enterprise to a user so as to evaluate the enterprise value. The enterprise evaluation device includes: gazette acquisition means for acquiring registration gazette of patent applications applied within a predetermined period by a specific enterprise from a database; the number-of-inventions acquisition means for acquiring the number of inventions as the number of patent applications registered within a predetermined period or as the number of claims; the number-of-vanished-patents acquisition means for acquiring the number of vanished patents within a predetermined period among the number of inventions acquired; total number-of-valid-patents counting means for calculating the total number of valid patents by subtracting the number of vanished patens from the number of patents acquired; total valid patent remaining ratio calculation means for calculating the total valid patent remaining ratio by dividing the obtained total number of valid patent applications by the number of inventions; and output means for outputting the calculated total valid patent remaining ratio to the display means, to the printing means, to the recording medium, or to other communication devices via a communication line.

FIG. 10

PATENT STOCK RELATED INDEXES
(ELECTRICAL EQUIPMENT)

| NAME OF ENTERPRISE | TOTAL NUMBER OF EFFECTIVE PATENTS (PSTE) | TOTAL EFFECTIVE PATENT REMAINING RATIO (PSRR) | AVERAGE REMAINING YEARS OF TOTAL EFFECTIVE PATENTS (PSAR) | PATENT STOCK INDEX (PSIN) |
|---|---|---|---|---|
| MS | 39,984 | 87.7 | 8.3 | 333,290 |
| SN | 15,465 | 98.7 | 7.0 | 108,793 |
| HT | 23,139 | 74.6 | 7.3 | 169,696 |
| TS | 22,846 | 84.7 | 7.7 | 176,846 |
| MB | 17,676 | 78.0 | 8.4 | 147,971 |
| FJ | 14,637 | 76.3 | 7.7 | 111,992 |
| NC | 37,802 | 74.6 | 10.9 | 412,672 |
| SY | 13,109 | 87.1 | 9.0 | 117,887 |
| SH | 11,968 | 95.3 | 9.3 | 111,303 |
| PI | 1,552 | 80.8 | 6.7 | 10,357 |

EP 1 688 874 A1

**Description**

TECHNICAL FIELD

The present invention relates to an enterprise evaluation device and enterprise evaluation program capable of evaluating the value of an enterprise based on patent documents.

BACKGROUND ART

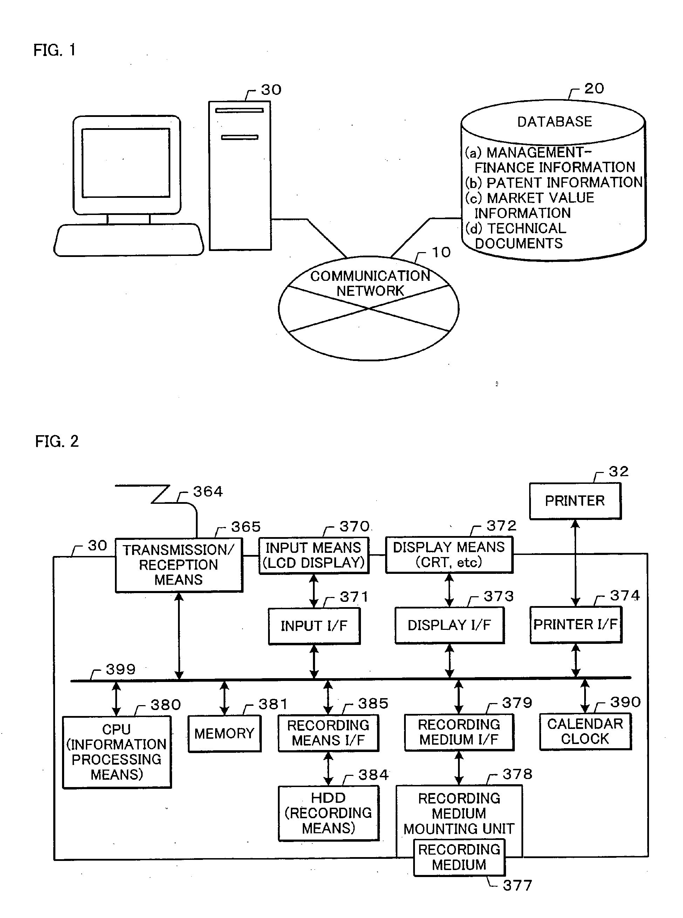

Conventionally, Japanese Patent Laid-Open Publication No. 2000-348015 (pages 3 to 7, FIGs. 1 to 4) describes a system, method and recording medium for evaluating an evaluation item based on first data having a predetermined renewal interval and second data having a renewal interval that is shorter than the first data. This evaluation system has (a) means for creating a first evaluation model according to input of the first data of sample targets, (b) means for applying the first data of the sample targets to the first evaluation model and calculating first evaluation output, (c) means for creating a second evaluation model according to input of the second data and the first evaluation output of the sample targets, (d) means for applying the first data to the first evaluation model according to the input of the first data of an evaluation target and calculating second evaluation output, and (e) means for applying the second data and the second evaluation output of the evaluation target to the second evaluation model and calculating the evaluation output of the evaluation target, and thereby evaluates the evaluation item of the evaluation target that could change with time.

With the foregoing Japanese Patent Laid-Open Publication No. 2000-348015, to predict changes in the enterprise evaluation derived from data in which the renewal period is relatively long such as every year or every quarter, data in which the renewal period is relatively short such as stock price, interest and currency exchange that fluctuate from day to day is used to reflect changes in the economy. In this system, enterprise evaluation is made in a timely manner at the point in time such evaluation is to be made.

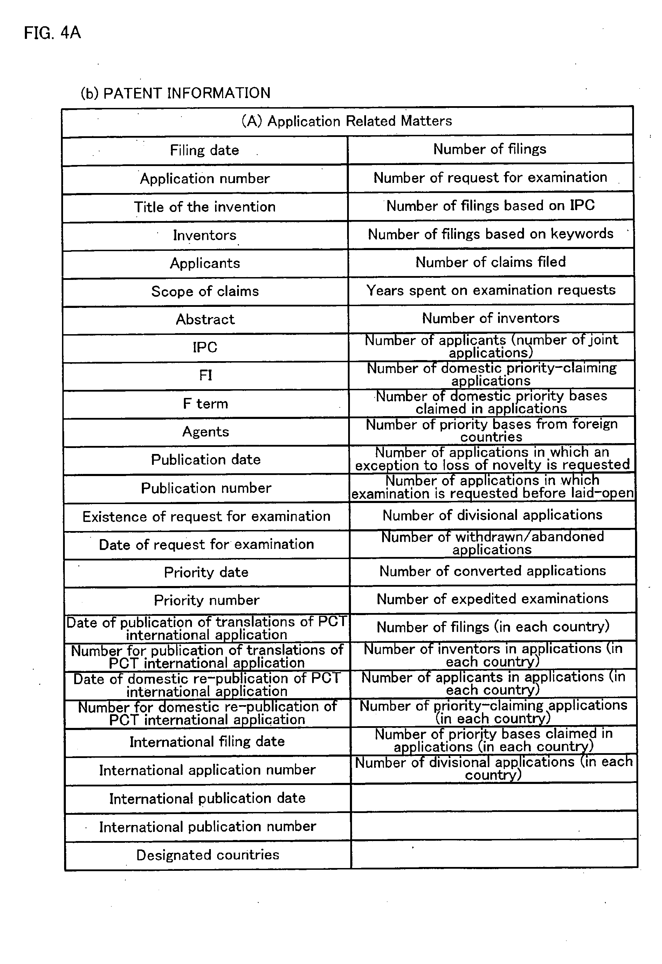

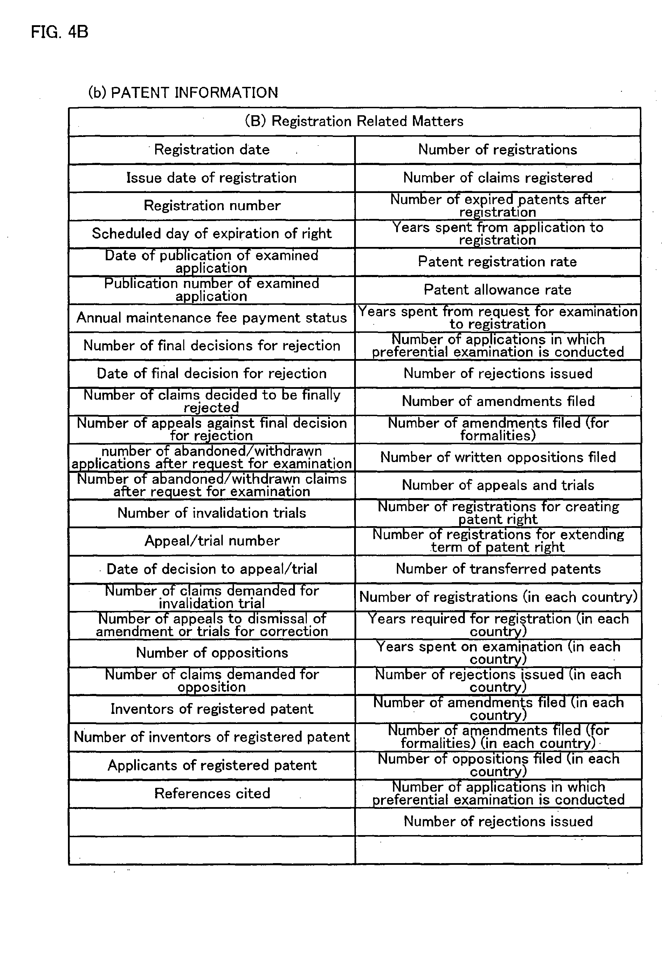

Further, Japanese Patent Laid-Open Publication No. 2001-76042 (pages 4 to 13, FIGs. 4 to 6) describes an intellectual property evaluation device and intellectual property evaluation method for evaluating the proprietary nature of intellectual property relating to a pending or registered invention or the like. This evaluation device has an actual profit input means for inputting data regarding the actual profit, a compound cost rate input means for inputting data regarding the compound cost rate per year, a compound present value calculation means for calculating the compound present values of annual compensation by multiplying the data regarding the actual profit with the data regarding the compound cost rates per year, an intellectual property price calculation means for calculating an intellectual property price by totaling the compound present value of the calculated annual compensation amounts, and an output means for outputting the calculated intellectual property value amount calculated with the intellectual property price calculation means.

The invention described in Japanese Patent Laid-Open Publication No. 2001-76042 is for comprehending the asset value of currently existing patents by depreciating registered patents and the related sales volume and profits. Moreover, with respect to the evaluation of the value of each patent, the input ranking of evaluation conducted by one's own company and evaluation conducted by other companies is evaluated as the contribution.

Further, Japanese Patent Publication No. 2002-502529 of Translation of PCT Application describes a method for processing data, including the steps of maintaining at least one first patent database, maintaining at least one second non-patent database of interest to a corporate entity, and maintaining one or more groups, wherein each of the one or more groups have an arbitrary number of patents from at least one first database, and further including a step of automatically processing non-patent information from at least one second database and one patent of the foregoing one or more groups.

For financial institutions, investors and corporations, it is extremely important to assess the enterprise value of investment destinations and customers. Thus, conventionally, in order to assess such enterprise value, attempts have been made for objectively judging the enterprise value based on management-finance information regarding management, finance or stock prices. Among such attempts, there are methods of screening and ranking the company to be evaluated via multivariate analysis, statistical techniques and data mining methods.

DISCLOSURE OF THE INVENTION

Recently, with the increasing ratio of intangible assets making up the enterprise value, the value of intangible assets now has a great influence on the enterprise value. Nevertheless, generally speaking, an enterprise value is not a book value in a balance sheet represented by total assets = liabilities + stockholders' equity, and is roughly calculated by the total market value + liabilities. Therefore, when complete current value accounting is applied, the amount calculated by the total market value - stockholders' equity will represent the validity of invisible assets (intangible assets) of the enterprise. Nevertheless, there is a drawback in that it is difficult to specifically calculate the value of intangible assets and judge the value according to application.

Further, with the system described in Japanese Patent Laid-Open Publication No. 2000-348015, a model for enterprise evaluation is created by inputting data (dynamic data) with a short renewal period such as stock prices in addition to data (static data) with a long renewal period such as financial data to be publicly announced at the end of the fiscal term. The static data and dynamic data related to the evaluation target are applied to this model. Thereby, the item to be evaluated, which could change over time, is calculated in a timely manner and as the latest information. Nevertheless, there is a drawback in that it is not possible to judge the attitude of enterprises to patents and the trend of intellectual property strategy.

Moreover, the intellectual property evaluation device described in Japanese Patent Laid-Open Publication No. 2001-76042 is to evaluate the intellectual property such as patents one by one each year, and there is a drawback in that it is not possible to judge the value of a specified enterprise. Further, in this present day when the number of joint inventions and joint applications is increasing, there is a drawback in that it is not possible to accurately judge the number of registered inventions of an enterprise and improve the reliability of data upon acquiring the number of registered inventions per unit of applicant.

Further, with the intellectual property evaluation device described in Japanese Patent Laid-Open Publication No. 2001-76042, it is not possible to associate and display the sales volume and the term of patent right. Thus, there is a drawback in that the difference in technical strength and monopoly power per industry or per enterprise cannot be read clearly, and the research and development strategy or intellectual property strategy of enterprises cannot be analyzed accurately.

With the method for processing data described in Japanese Patent Publication No. 2002-502529 of Translation of PCT Application, there is a database containing patent information data and non-patent information data (finance information, R&D information, configuration table of manufactured products, R&D expenses of manufactured products, royalty income from patents of manufactured products, information of competitors and so on of the enterprise), a network is connected with the user, the user inputs information that he/she wants and such information is subject to computer processing and provided to the user, whereby the user is able to make an evaluation. Further, in addition to searching patents relating to products manufactured by the enterprise, R&D expenses relating to such patents and the royalty income thereof are calculated and processed. Nevertheless, there is no materiality in the subject matter of the calculation processing other than (R&D)/(number of patents), and there is a problem in that it is also difficult to implement regarding the other indexes. Moreover, there is a drawback in that it is not possible to evaluate enterprises by tabulating all patents owned by an enterprise, not specific patents, and then combining this information and finance information.

The total market value is determined by the stock prices in the market. Thus, whether the current stock price and the value of intangible assets calculated based on the stockholders' equity in the book are valid is an extremely important element for investors in the decision-making of stock trading. Enterprises are hoping to increase their value of intangible assets and thereby increase their enterprise value by procuring funds and continuing technical developments. Therefore, increasing the value of intangible assets will be positioned as an important issue in the management strategy for enterprises.

There have been attempts of trying to evaluate intangible assets from the past. Nevertheless, there is a drawback in that it is not possible to evaluate the enterprise value validity by quantitatively and qualitatively incorporating the value of intangible assets. Further, when making an investment in a specified enterprise or jointly developing a product with a specified enterprise, or desiring to be employed in a specified enterprise, there is a drawback in that it is difficult to know the trend of such enterprise in each technical field or to predict the potential of such enterprise.

Thus, in light of the foregoing conventional circumstances, an object of the present invention is to provide an enterprise evaluation device and enterprise evaluation program capable of acquiring registered patent publications of a specified enterprise, analyzing the research and development strategy and intellectual property strategy of enterprises, and, together with management-finance information, performing enterprise value evaluation.

In order to achieve the foregoing object, the present invention comprises:

gazette acquisition means for acquiring registration gazettes based on patent applications filed by a specified enterprise within a specified period;

number-of-inventions acquisition means for acquiring the number of patents subjected to, before a predetermined time, registration or number of claims of the patents as the number of inventions from the acquired registration gazettes;

number-of-extinguished-inventions acquisition means for acquiring the number of extinguished inventions that extinguished before a predetermined time from the acquired number of inventions;

total number-of-effective-patents calculation means for calculating the total number of effective patents by subtracting the number of extinguished inventions from the acquired number of inventions;

total effective patent remaining ratio calculation means for calculating the total effective patent remaining ratio through dividing the calculated total number of effective patents by the number of inventions; and

output means for outputting the calculated total effective patent remaining ratio to display means, printing means, recording medium, or another telecommunications device via a communication line.

Further, in order to achieve the foregoing object, the present invention comprises:

gazette acquisition means for acquiring registration gazettes based on patent applications filed by a specified enterprise within a specified period from a database;

number of inventions per applicant acquisition means for acquiring the number of patents subjected to, before a predetermined time, registration or number of claims of the patents as the number of registered inventions from each of said acquired registration gazettes, acquiring the number of applicants described in each of said acquired gazettes, and acquiring the number of registered inventions per unit of applicant through dividing said acquired number of registered inventions by the number of applicants;

number of registered inventions acquisition means for counting said acquired number of registered inventions per unit of applicant for said all acquired gazettes and acquiring the total number of registered inventions as the number of inventions;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

total effective patent remaining ratio calculation means for calculating the total effective patent remaining ratio through dividing said calculated total number of effective patents by said number of inventions; and

output means for outputting said calculated total effective patent remaining ratio to display means, printing means, recording medium, or another telecommunications device via a communication line.

Further, in order to achieve the foregoing object, the gazette acquisition means of the present invention acquire registration gazettes based on patent applications in a predetermined technical field filed within a specified period by a specified enterprise from a database.

Further, in order to achieve the foregoing object, the present invention comprises:

gazette acquisition means for acquiring registration gazettes for patents surviving up to a predetermined time among the patent applications filed by a specified enterprise within a specified period from a database;

remaining period calculation means for calculating a term expiration date of each of rights of said acquired registration gazettes, and calculating the remaining period by subtracting the predetermined time from said term expiration date;

patent stock index calculation means for calculating a patent stock index by counting said calculated remaining period for all registration gazettes for patents surviving up to the predetermined time; and

output means for outputting said calculated patent stock index to display means, printing means, recording medium, or another telecommunications device via a communication line.

Further, in order to achieve the foregoing object, the remaining period per applicant calculation means of the present invention calculate a term expiration date of each of rights of said acquired registration gazettes, and calculate a remaining period by subtracting the predetermined time from said term expiration date, and acquire the number of applicants described in each of said acquired gazettes, and calculate the remaining period per unit of applicant through dividing said remaining period by the number of applicants.

Further, in order to achieve the foregoing object, the patent stock index calculation means of the present invention calculate a patent stock index by counting said calculated remaining period for all registration gazettes for patents surviving up to the predetermined time, and dividing the same by the average number of days of one year or one month.

Further, in order to achieve the foregoing object, the present invention comprises:

gazette acquisition means for acquiring registration gazettes for patents surviving up to a predetermined time among the patent applications filed by a specified enterprise within a specified period from a database;

remaining period calculation means for calculating a term expiration date of each of rights of said acquired registration gazettes, and calculating the remaining period by subtracting the predetermined time from said term expiration date;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time; and

output means for outputting said calculated average remaining period of total effective patents to display means, printing means, recording medium, or another telecommunications device via a communication line.

Further, in order to achieve the foregoing object, the average remaining period of total effective patents calculation means of the present invention calculate the average remaining period of total effective patents through dividing said patent stock index by the number of registration gazettes for patents surviving up to said predetermined time and the average number of days of one year or one month.

Further, in order to achieve the foregoing object, the present invention uses, as the registration gazettes for calculating the total effective patent remaining ratio, patent stock index or average remaining period of total effective patents, gazettes including publications of patent registrations, publications of examined patent applications, publications of examined utility model applications or publications of utility model registrations.

Further, in order to achieve the foregoing object, the present invention comprises:

gazette acquisition means for acquiring registration gazettes based on patent applications filed by a specified enterprise within a specified period from a database;

number-of-inventions acquisition means for acquiring the number of patents subjected to, before a predetermined time, registration or number of claims of the patents as the number of inventions from said acquired registration gazettes;

display data generation means for generating display data for associating said number of inventions and the patent stock index for display; and

output means for outputting said display data to display means, printing means, recording medium, or another telecommunications device via a communication line.

Further, in order to achieve the foregoing object, the present invention comprises:

sales volume acquisition means for acquiring a sales volume of a specified enterprise during a predetermined time from a management-finance database recording management-finance information of an enterprise;

display data generation means for generating display data for associating said sales volume and the patent stock index for display; and

output means for outputting said display data to display means, printing means, recording medium, or another telecommunications device via a communication line.

BRIEF DESCRIPTION OF THE DRAWINGS

FIG. 1 is a diagram showing the overall configuration of an enterprise evaluation system;
FIG. 2 is a signal processing system block diagram of an enterprise evaluation device;
FIG. 3 is a diagram showing an example of management-finance information;
FIGS. 4A and 4B are diagrams showing an example of technical information (patent information);
FIG. 5 is a chart illustrating the respective indexes of "business, profit, market value" calculated by the enterprise evaluation device and the calculating formula thereof;
FIG. 6 is a chart illustrating the respective indexes of "business, profit, market value" calculated by the enterprise evaluation device and the calculating formula thereof;
FIG. 7 is a chart illustrating the respective indexes of "R&D, patent" calculated by the enterprise evaluation device and the calculating formula thereof;
FIG. 8 is a chart illustrating the respective indexes of "R&D, patent" calculated by the enterprise evaluation device and the calculating formula thereof;
FIG. 9 is a chart illustrating the respective indexes of "patent portfolio" calculated by the enterprise evaluation device and the calculating formula thereof;
FIG. 10 is a chart showing a display example of a patent stock related index in the electrical equipment industry;
FIG. 11 is a chart showing a display example of a patent stock related index in the chemical industry;
FIG. 12 is a diagram showing the relationship of the patent stock index and total number of effective patents in the chemical industry;
FIG. 13 is a diagram showing the relationship of the patent stock index and total number of effective patents in the electrical equipment industry;
FIG. 14 is a diagram showing the relationship of the patent stock index and sales volume in the chemical industry and electrical equipment industry;
FIG. 15 is a processing flowchart upon calculating and outputting the various indexes;

FIG. 16 is a diagram showing a display example of the display menu for selecting the type of index upon evaluating the enterprise value;

FIG. 17 is a diagram showing a state where the user selected "(PT) patent acquisition (registration) related index" in the display menu for selecting the type of index;

FIG. 18 is a diagram showing an example of a case where the user selected "(PS) patent stock related index" in the display menu for selecting the type of index;

FIG. 19 is a diagram showing an example of a case where the user selected "patent stock index" from the selection menu of "(PS) patent stock related " in the display menu for selecting the type of index;

FIG. 20 is a diagram showing an example of a case where the user selected "(C) profit related index" among the selection menu of "business, profit, market value" in the display menu for selecting the type of index;

FIG. 21 is a diagram showing an example of a case where the user selected "sales volume" among the selection menu of "(C) profit related index" in the display menu for selecting the type of index;

FIG. 22 is a diagram showing a display example of an enterprise value evaluation input condition setting screen for selecting the conditions of the "target document" and "reading of data" upon calculating the index for determining the enterprise value;

FIG. 23 is a diagram showing a display example of an enterprise value evaluation input condition setting screen for selecting the conditions of the target industry or respective enterprises upon calculating the index for determining the enterprise value;

FIG. 24 is a diagram showing an output condition setting screen of the calculated index;

FIG. 25 is a diagram showing a state where the user selected "(A) investment index" in the display menu for selecting the type of index;

FIG. 26 is a diagram showing an example where the user selected "investment trend index" from the selection menu of "(C) investment index" in the display menu for selecting the type of index;

FIG. 27 is a diagram showing an example where the user selected the items of "(PA) patent application related index" in the display menu for selecting the type of index; and

FIG. 28 is a diagram showing an example where the user selected "number of claims filed" from the items of "(PA) patent application related index" in the display menu for selecting the type of index.

## BEST MODE FOR CARRYING OUT THE INVENTION

Embodiments of the present invention are now explained with reference to the drawings.

FIG. 1 is a diagram showing the overall configuration of an enterprise evaluation system according to the present invention.

As shown in FIG. 1, the enterprise value evaluation system is configured from a database 20 recording various types of information such as management-finance information, technical documents (in addition to patent information, information relating to utility models and technical journals), market value information (numerical value information of the market value), threshold for determining the validity of the enterprise value, determination result of the validity and category based on such threshold; an enterprise evaluation device 30 for inputting various types of information such as management-finance information, technical documents and market value information and outputting the judgment results of the validity of the enterprise value; and a communication network 10 such as the Internet or dedicated communication line for communicably connecting the enterprise evaluation device 30 and database 20.

Incidentally, the database 20 may be provided inside the enterprise evaluation device 30.

FIG. 2 is a signal processing system block diagram of an enterprise evaluation device according to the present invention.

As shown in FIG. 2, the information transmission-reception unit of the enterprise evaluation device 30 is provided with a transmission-reception means 365 (including the functions of a management-finance information acquisition means, gazette acquisition means or output means) for transmitting and receiving information to and from another telecommunications device via the communication network 364 such as a public line or telecommunications network.

Further, the enterprise evaluation device 30 is also provided with an input interface 371 for acquiring various types of information input by the user via the input means 370 and transmitting this to the information processing means described later, and outputting display commands to an LCD or the like based on instructions from the information processing means, a display means 372 for displaying information such as images or texts, graphs or charts, a display interface 373 (including the function of an output means) for outputting image signals for display to the display means 372 based on the command from the information processing means, and a printer interface 374 for outputting information such as images or texts, graphs or charts to a printer 32 or the like. Incidentally, the input means 370 includes input devices such as a keyboard, mouse, tablet and the like.

Further, the enterprise evaluation device 30 is also provided with a recording medium mounting unit 378 for detachably mounting a recording medium 377, and a recording medium interface 379 (including the functions of a management-finance information acquisition means, gazette acquisition means or out put means) for recording and reading various types of information in and from the recording medium 377. Incidentally, the recording medium 377 is a detachable recording medium in a magnetic recording format or optical recording format as represented by semiconductors such as a memory card, MO, magnetic disk and so on.

Moreover, the enterprise evaluation device 30 is also provided with an information processing means 380 for controlling the overall enterprise evaluation device 30, and a memory 381 configured from a ROM recording programs to be executed by the information processing means 380 and various constants, or a RAM which is a recording means to become the working area upon the information processing means 380 executing processing.

Further, the information processing means 380 is able to realize the various functions of a management-finance information acquisition means, gazette acquisition means, number-of-inventions acquisition means, number-of-extinguished-inventions acquisition means, total number-of-effective-patents calculation means, total effective patent remaining ratio Calculation means, number of inventions per applicant acqui-sition means, number of registered inventions acquisition means, remaining period calculation means, patent stock index calculation means, remaining period per applicant calculation means, average remaining period of total effective patents calculation means, display data generation means and output means. Incidentally, instead of the information processing means 380 performing all of the processing to be performed by the foregoing means, a plurality of dedicated processing devices may be provided so that the respective processing devices can share and execute such processing in order to achieve the objects of the present invention.

Moreover, the enterprise evaluation device 30 is also provided with a recording means 384 such as a hard disk recording various types of information; for example, various constants relating to the processing of the enterprise evaluation device 30, attribute information upon communicably connecting to a telecommunications device on a network, connection information such as a URL (Uniform Resource Locators), gateway information, DNS (Domain Name System), management-finance information relating to the management of the enterprise, technical documents relating to patents, market value information, threshold for determining the enterprise value and determination results based on such threshold; recording means interface 385 (including the functions of a management-finance information acquisition means, gazette acquisition means or output means) for reading information recorded in the recording means 384 and writing information to the recording means 384; and a calendar clock 390 for clocking the time.

The respective peripheral circuits of the information processing means 380, display interface 373, memory 381, recording means interface 385 and calendar clock 390 in the enterprise evaluation device 30 is connected to a bus 399, and the respective peripheral circuits can be controlled based on the processing program to be executed by the information processing means 380.

Incidentally, various databases of the management-finance information, technical documents and market value information may be stored in the recording means 384, provided by the storage medium 377 such as a CD-ROM, CD-RW, DVD or MO, or acquired from another telecommunications device (database 20 or the like) via the communication network 364.

Further, the enterprise evaluation device 30 can be realized by using various types of computers such as a personal computer or workstation. Moreover, computers may be connected via a network to share and implement the functions.

The management-finance information acquisition means of the transmission-reception means 365, recording means interface 385, recording medium interface 379 and information processing means 380 is capable of acquiring management-finance information such as the sales volume in a period to be researched from a management-finance information database (database 20, recording means 384, recording medium 377 or the like) recording information showing the size of the enterprise to be researched or management-finance information such as the finance information of the enterprise.

In addition, the gazette acquisition means of the transmission-reception means 365, recording means interface 385, recording medium interface 379 and information processing means 380 is capable of acquiring technical documents in an enterprise to be researched, technical field to be researched or period to be researched from a technical document database (database 20, recording means 384, recording medium 377 or the like).

Further, the gazette acquisition means of the transmission-reception means 365, recording means interface 385, recording medium interface 379 and information processing means 380 is capable of acquiring registration gazettes for patents surviving up to a predetermined time among the patent applications filed by a specified enterprise in a predetermined technical field within a specified period from a database (database 20, recording means 384, recording medium 377 or the like).

Moreover, the gazette acquisition means of the transmission-reception means 365, recording means interface 385, recording medium interface 379 and information processing means 380 is capable of acquiring registration gazettes such as patent registration gazettes, publications of examined patent applications, publications of examined utility model applications or utility model registration gazettes, or unexamined publications such as publications of unexamined patent applications, published Japanese translations of PCT international applications for patents, publications of unexamined utility model applications or published Japanese translations of PCT international applications for utility models from a technical document database (database 20, recording means 384, recording medium 377 or the like).

Further, the management-finance information acquisition means of the transmission-reception means 365, recording means interface 385, recording medium interface 379 and information processing means 380 is capable of acquiring the sales volume relating to patent applications filed by a specified enterprise in a predetermined technical field within a specified period from a management-finance database (database 20, recording means 384, recording medium 377 or the like) storing management-finance information of an enterprise.

Moreover, the output means of the transmission-reception means 365, recording means-interface 385, recording medium interface 379, printer interface 374 and information processing means 380 is capable of outputting various indexes such as the total effective patent remaining ratio, patent stock index and average remaining period of total effective patents to a display means, printing means, recording medium, or another telecommunications device via a communication line.

Further, the output means of the transmission-reception means 365, recording means interface 385, recording medium interface 379, printer interface 374 and information processing means 380 is capable of outputting display data for associating the number of inventions and patent stock index for display, and display data for associating the sales volume and patent stock index to a display means for display, printing means, recording medium, or another telecommunications device via a communication line.

Moreover, the number-of-inventions acquisition means of the information processing means 380 and the like is capable of acquiring the number of patents subjected to, before a predetermined time, registration or number of claims of the patents as the number of inventions from the acquired registration gazettes.

Further, the number-of-extinguished-inventions acquisition means of the information processing means 380 and the like is capable of acquiring the number of extinguished inventions that extinguished before a predetermined time from the acquired number of inventions.

Moreover, the total number-of-effective-patents calculation means of the information processing means 380 and the like is capable of calculating the total number of effective patents by subtracting the number of extinguished inventions from the acquired number of inventions.

Further, the total effective patent remaining ratio calculation means of the information processing means 380 and the like is capable of calculating the total effective patent remaining ratio through dividing the calculated total number of effective patents by the number of inventions.

Moreover, the number of inventions per applicant acquisition means of the information processing means 380 and the like is capable of acquiring the number of patents subjected to registration or number of claims of the patents as the number of registered inventions, acquiring the number of applicants described in the acquired gazettes, and acquiring the number of registered inventions per unit of applicant through dividing the acquired number of registered inventions by the number of applicants.

Further, the number of registered inventions acquisition means of the information processing means 380 and the like is capable of counting the acquired number of registered inventions per unit of applicant for the all acquired gazettes and acquiring the total number of registered inventions as the number of inventions.

Moreover, the remaining period calculation means of the information processing means 380 is capable of calculating a term expiration date of each of rights of the acquired registration gazettes, and calculating the remaining period by subtracting the predetermined time from the term expiration date.

Further, the patent stock index calculation means of the information processing means 380 and the like is capable of calculating a patent stock index by counting the calculated remaining period for all registration gazettes for patents surviving up to the predetermined time.

Moreover, the remaining period per applicant calculation means of the information processing means 380 and the like is capable of calculating a term expiration date of each of rights of the acquired registration gazettes, calculating a remaining period by subtracting the predetermined time from the term expiration date, acquiring the number of applicants described in each of the acquired gazettes, and calculating the remaining period per unit of applicant through dividing the remaining period by the number of applicants.

Further, the average remaining period of total effective patents calculation means of the information processing means 380 and the like is capable of calculating the average remaining period of total effective patents through dividing the patent stock index by the number of registration gazettes for patents surviving up to the predetermined time.

Moreover, the display data generation means of the information processing means 380 and the like is capable of generating display data for associating the number of inventions and patent stock index in a chart form or graph form for display.

Further, the display data generation means of the information processing means 380 and the like is capable of generating display data for associating the sales volume and patent stock index in a chart form or graph form for display.

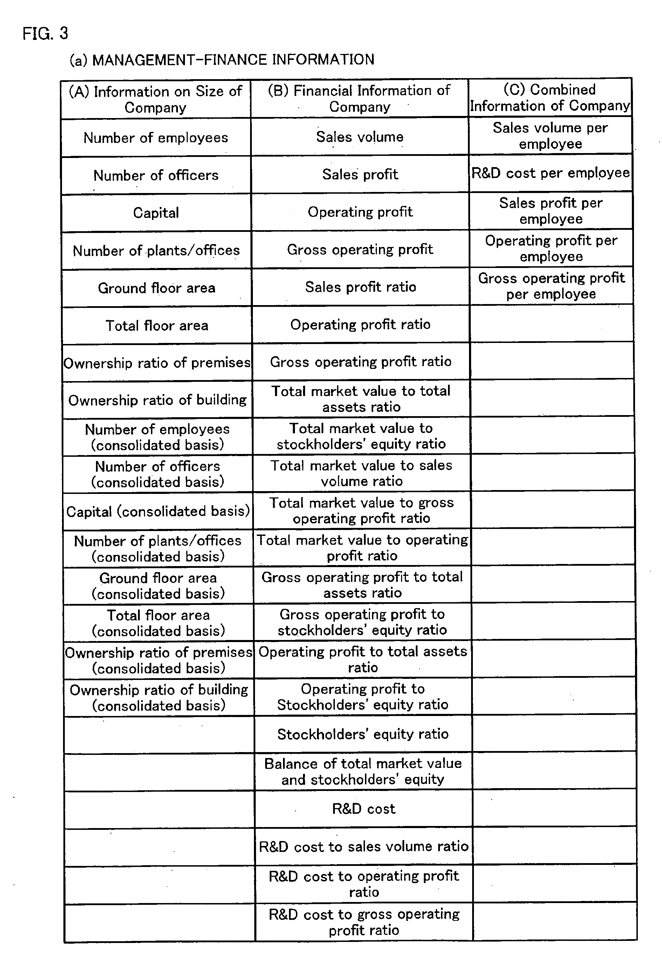

FIG. 3 is a chart representing an example of management-finance information recorded in the recording means of the database 20 or the like.

As shown in FIG. 3, management-finance information includes information showing the size of the company, information showing the financial information of the company, and combined information of the company calculated by combining the various types of information of the company. Incidentally, as the data of management-finance information, the annual security report of the company to be researched, and information acquired from commercial databases provided by newspaper publishers and research institutes may be used.

Information showing the size of the company includes the number of employees, number of officers, capital, number of plants, number of offices, ground floor area, total floor area, ownership ratio of premises, ownership ratio of building, number of employees (consolidated basis), number of officers, (consolidated basis), capital (consolidated basis), number of plants (consolidated basis), number of offices (consolidated basis), ground floor area (consolidated basis), total floor area (consolidated basis), ownership ratio of premises. (consolidated basis) or ownership ratio of building (consolidated basis).

The financial information of the company includes the sales volume, sales profit, operating profit, sales profit ratio, operating profit ratio, total market value to total assets ratio, total market value to stockholders' equity ratio, total market value to sales volume ratio, total market value to gross operating profit ratio, total market value to operating profit ratio, gross operating profit to total assets ratio, gross operating profit to stockholders' equity ratio, operating profit to total assets ratio, operating profit to stockholders' equity ratio, stockholders' equity ratio, balance of total market value and stockholders' equity, R&D cost, R&D cost to sales volume ratio, R&D cost to gross operating profit ratio, gross operating profit ratio or gross operating profit.

The combined information of the company includes the sales volume per employee, R&D cost per employee, sales profit per employee, operating profit per employee, gross operating profit per employee and so on.

The gross operating profit is now explained.

Pursuant to the revision of the accounting standards, as a general rule in Japan, R&D cost must be recorded entirely as expenses in the settlement of accounts after the term ending March 2000. Conventionally, there were numerous companies that did not disclose the breakdown of the R&D cost included in the manufacturing costs and general administrative expenses. Nevertheless, after the enforcement of these regulations, the amount of R&D cost pertaining to the calculation of profits and losses became clear. Thereupon, for the purpose of multilaterally analyzing the actual status of such R&D cost of the company, and index referred to as the "gross operating profit" has been developed.

This is an estimate of hypothetical profits (main business excluding research and development activities; that is, gross profit generated from the manufacture and sale activities) sought by adding the R&D cost to the operating profit. As a result of the R&D cost being entirely recorded as expenses, upon calculating profits and losses, the more research and development activities are positively engaged, the more operating profit will be compressed. Thus, while the importance of technology development (intellectual property) is being discussed, there is a problem in that it is difficult to grasp the actual condition of the profitability of the company only from the perspective of operating profit. The foregoing estimate is considered to provide a perspective to this problem.

This gross operating profit is an index that is positioned roughly between the sales profit and operating profit. By using the gross operating profit simultaneously with the sales profit and operating profit, it will be possible to grasp the profitability of the company from many angles.

The sales profit is the gross margin sought by subtracting the manufacturing cost from the sales volume. Nevertheless, some R&D cost are included in manufacturing costs, whereas others are included in general administrative expenses. Thus, strictly speaking, the gross operating profit cannot be called a profit index positioned between the sales profit and operating profit. The relationship of the gross operating profit and other profit indexes can be represented with the formula indicated below.

```
Gross operating profit

= (sales profit) + (R&D cost included in the manufacturing costs) - {(general administrative expenses) - (R&D cost included in the general administrative expenses)}

= operating profit + R&D cost
```

FIGS. 4A and 4B are diagrams showing an example of a technical document recorded in a recording means of the database 20 or the like.

As shown in FIGS. 4A and 4B, technical documents contain patent documents such as filing information and registration information of patents and utility models. As data of technical documents, for instance, the Industrial Property Digital Library database of the Japanese Patent Office, information relating to patents and utility models acquired from CD-ROM gazettes or other technical journals may be used.

Application information of the present invention includes, for instance, per enterprise, the following: the filing date, application number, title of the invention, inventors, applicants, scope of claims, abstract, IPC, FI, F Term, agents, publication date, publication number, existence of request for examination, date of request for examination, priority date, priority number, date of publication of translations of PCT international application, number for publication of translations of PCT international application, date of domestic re-publication of PCT international application, number for domestic re-publication of PCT international application, international filing date, international application number, international publication date, international publication number, designated country, number of filings, number of examinations requested, number of filings based on IPC, number of filings based on keywords, number of claims filed, years spent on examination requests, number of inventors, number of applicants (number of joint applications), number of domestic priority-claiming applications, number of domestic priority bases claimed in applications, number of priority bases from foreign countries, number of applications in which an exception to loss of novelty is requested, number of applications in which examination is requested before laid-open, number of divisional applications, number of withdrawn/abandoned applications, number of converted applications, number of expedited examinations, number of filings in each foreign country, number of inventors in each foreign country, number of applicants in each foreign country, number of priority-claiming applications in each foreign country, and number of priority bases claimed in applications in each foreign country or number of divisional applications in each foreign country.

Further, registration information of the present invention includes, for example, per enterprise, the following: the registration date, issue date of registration, registration number, scheduled day of expiration of right, date of publication of examined application, publication number of examined application, annual maintenance fee payment status, number of final decisions for rejection, date of final decision for rejection, number of claims decided to be finally rejected, number of appeals against final decision for rejection, number of abandoned/withdrawn applications after request for examination, number of abandoned/withdrawn claims after request for examination, number of invalidation trials, appeal/trial number, date of decision to appeal/trial, number of claims demanded for invalidation trial, number of appeals to dismissals of amendment or trials for correction, number of oppositions, number of claims demanded for opposition, inventors of registered patent, number of inventors of registered patent, applicants of registered patent, references cited, number of registrations, number of claims registered, number of expired patents after registration, years spent from application to registration, patent registration rate, patent allowance rate, years spent from request for examination to registration, number of applications in which preferential examination is conducted, number of rejections issued, number of amendments filed, number of amendments filed for formalities, number of registrations for creating patent right, number of registrations for extending term of patent right, number of transferred patents, number of registrations in each country, years required for registration in each country, years spent on examination in each country, number of rejections issued in each country, number of amendments filed in each country, number of amendments filed for formalities in each country, number of oppositions filed in each country, number of applications in which preferential examination is conducted or number of rejections issued.

The respective indexes upon evaluating enterprises based on the number of inventions are explained below.

Generally, it is possible to judge that an enterprise with a large number of inventions such as the number of patent applications or the number of claims contained in patent applications or patents is allotting their budget to the development of new products, is active in product development toward the future, and is expected to expand its business or improve its profits in the future.

Similarly, it is possible to judge that an enterprise with a large number of patents subjected to registration or large number of claims has exclusive technical strength for the future, and is expected to expand its business or improve its profits in the future.

Industrial products in recent years are equipped with numerous functions for increasing the value as the product itself, and the technical fields required for product development are broadening in accordance with the function or performance of the product. Further, when designing the product by improving the function or performance in order to improve the competitive position, development costs thereof will also rise considerably, and a substantial amount of funding and personnel will also become required.

If an enterprise that is creating numerous technical ideas for the development of new products and filing patent applications to acquire patents has sufficient development funds, it is possible to judge that this enterprise is expected to expand its business or improve its profits in the future in light of the exclusive right upon obtaining the patent.

Further, investors and banks wish to invest in enterprises with a promising future, and students and mid-career engineers wish to be employed in an enterprise with ingenious technical strength.

The present invention provides several indexes that will become a criterion for investors, banks, engineers and others to search for enterprises with ingenious technical strength and a promising future among a plurality of enterprises.

Incidentally, in the present invention, although explanation is given regarding enterprises that filed patent applications, indexes may also be calculated for patent applications filed by natural persons in addition to enterprises.

When reviewing unexamined publications of patent applications, there are many cases where a single patent application describes numerous novel inventions upon dividing the inventions into a plurality of claims. Based on this fact, it is possible to consider the number of patent applications or number of claims to be the number of inventions. Particularly in recent years, the number of claims included in a single patent application is of an increasing trend. Nevertheless, it has been statistically proven that the number of claims included in a single patent application have differing average values and trends depending on the technical field or business category, or per enterprise. Thus, if the trend analysis of patent applications of the respective enterprises, comparative assessment with other companies and analysis of technical strength are conducted simply with the number of applications, there may be some cases where this may cause a considerable misunderstanding. Due to the foregoing reasons, the patent application trend and technical trend of the respective companies in the embodiments of the present invention are captured from both aspects of the number of patent applications and the number of claims in a patent application.

Incidentally, in the foregoing example, although the number of patent applications, the number of registered patents or the number of claims thereof are used as number of inventions, the present invention is not limited thereto, and, as the number of inventions, the number of utility model registrations, number of claims registered, number of examination requests, number of claims requested for examination, number of final decisions for registration, number of claims decided to be registered, number of final decisions for rejection, number of claims decided to be rejected, number of demands for trial, number of claims demanded for trial and so on may also be used according to the intended purpose.

Moreover, a value combining two or more number of inventions, for instance, (number of registrations/number of examination requests) may also be used according to the intended purpose.

Further, although a case where IPC sub-classes are used as the technical field of the invention was described in the foregoing example, technical information is not limited to IPC sub-classes, and the classifications of IPC sections, classes, sub-classes, main groups, sub groups, F terms, FI, facets, keywords contained in the patent documents may also be used according to the intended purpose.

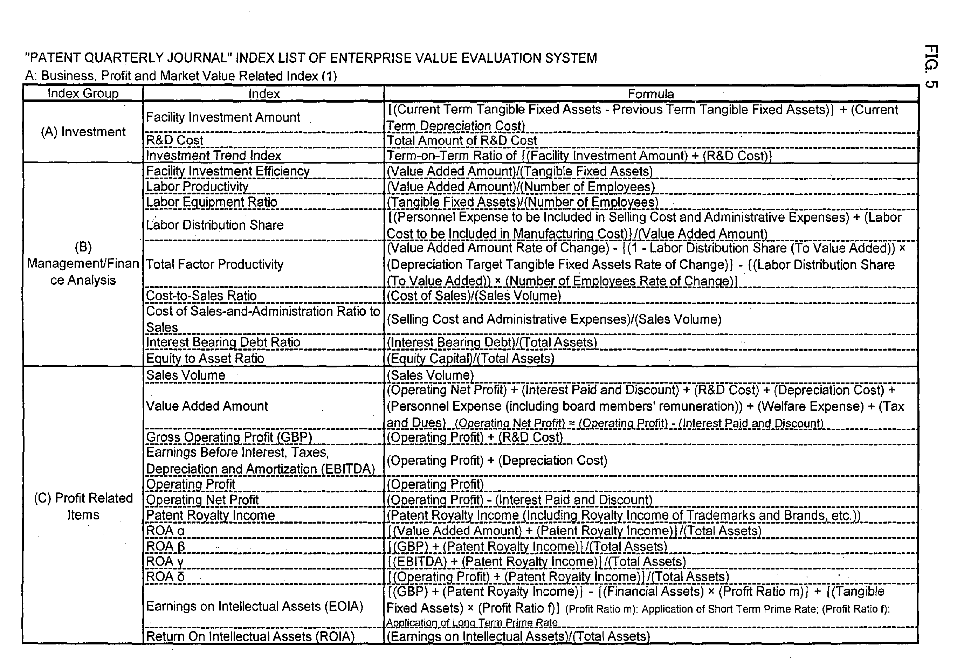

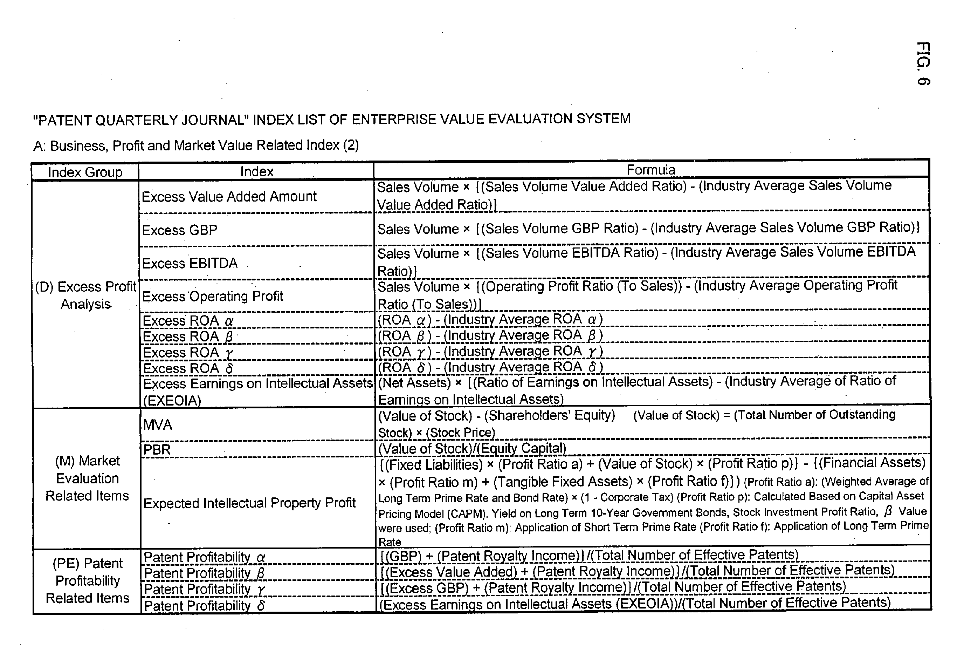

FIG. 5 and FIG. 6 are charts illustrating examples of the respective indexes of "business, profit, market value" calculated by the enterprise evaluation device pertaining to the present invention and the calculating formula thereof.

As shown in FIG. 5 and FIG. 6, as the index groups, "(A) investment", "(8) management-firiance analysis", "(C) profit related", "(D) excess profit analysis", "(M) market value related", and "(PE) patent profitability are provided, and the names and outline of the respective indexes and the calculating formula thereof are indicated in each of these groups.

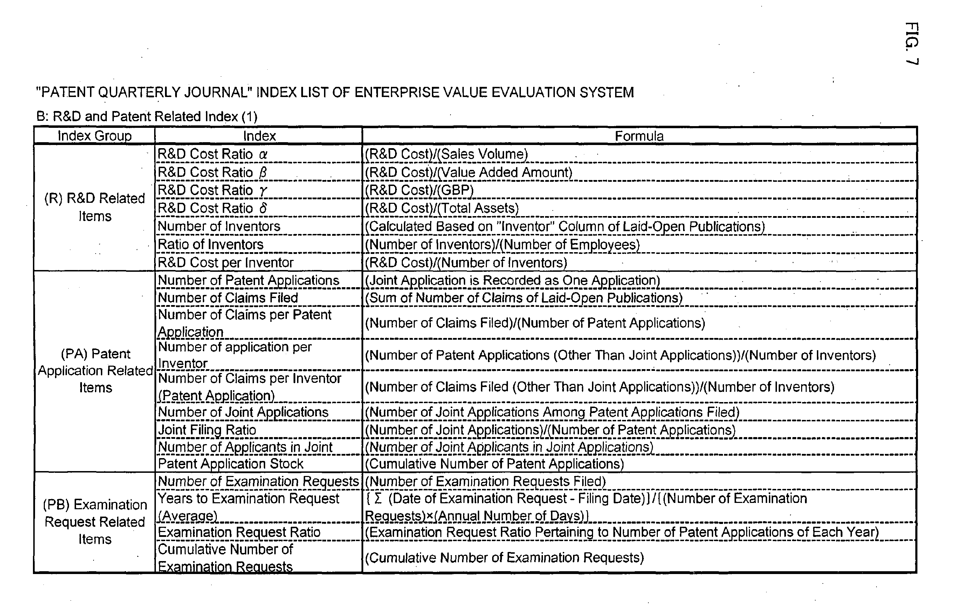

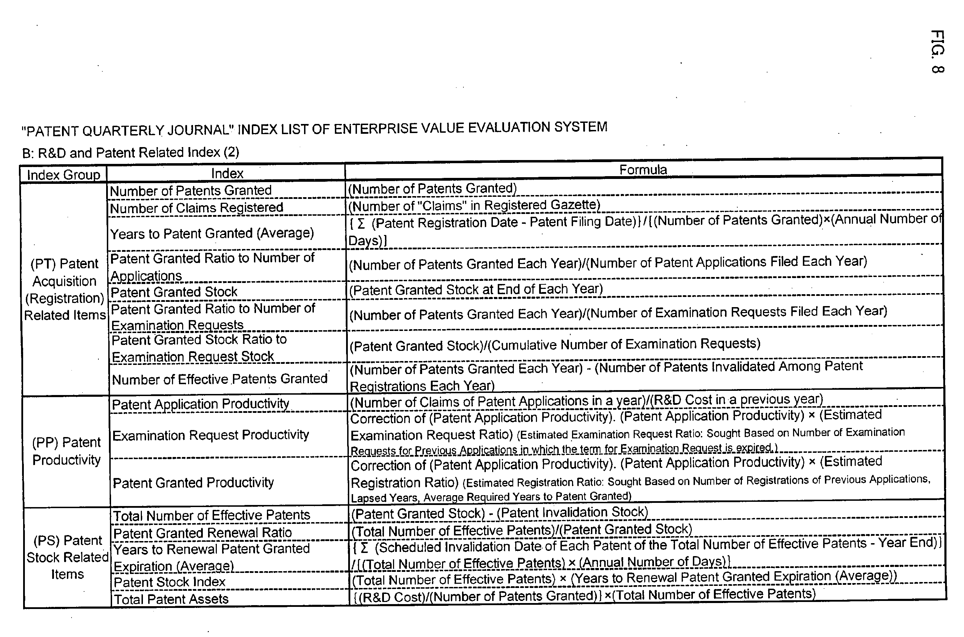

Further, FIG. 7 and FIG. 8 are charts illustrating examples of the index of "R&D, patent" calculated by the enterprise evaluation device pertaining to the present invention.

As shown in FIG. 7 and FIG. 8, as the index groups, "(R) research and development related", "(PA) patent application related", "(PB) examination request related", "(PT) patent acquisition (registration) related", "(PP) patent productivity" and "(PS) patent stock related" are provided, and the names and outline of the respective indexes and the calculating formula thereof are indicated in each of these groups.

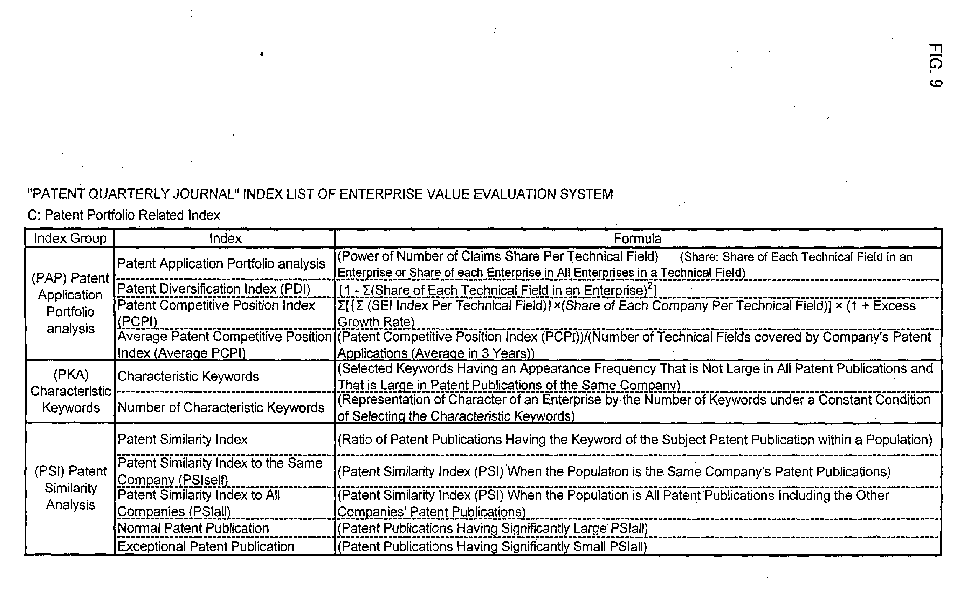

FIG. 9 is a chart illustrating an example of the "patent portfolio" index calculated by the enterprise evaluation device pertaining to the present invention.

As shown in FIG. 9; as the index groups, "(PAP) patent application portfolio analysis", "(PAK) characteristic keywords", and "(PSI) patent similarity ratio analysis" are provided, and the names and outline of the respective indexes and the calculating formula thereof are indicated in each of these groups.

Next, the respective indexes pertaining to the present invention are explained.

In the present invention, among the respective indexes shown in FIG. 8, the two broad classifications below and the respective indexes included in the lower hierarchy are explained. Further, abbreviation of the respective indexes is defined as "patent stock related index (PS)" and so on.

Patent Stock Related Index (PS)

(1) Cumulative number of patent registrations (patent granted stock; PTSP)
(2) Total number of effective patents (PSTE)
(3) Total effective patent remaining ratio (patent granted renewal ratio; PSRR)
(4) Average remaining years of total effective patents (years to renewal patent granted expiration (average); PSAR)
(5) Patent stock index (PSIN)

Each of the indexes listed above is now explained.

(1) Cumulative number of patent registrations (patent granted stock; PTSP)

Cumulative number of patent registrations (PTSP) is an index showing cumulative number of patent registrations (number of inventions) subjected to registration by a predetermined time among the patent applications filed by a specified enterprise within a specified period. The calculating formula thereof is shown below (Formula 1).

```
Cumulative number of patent registrations (PTSP)

= cumulative number of patent registrations subject to registration by a predetermined time among the patent applications filed by a specified enterprise within a

specified period …(Formula 1)
```

Provided,
"Specified period" shows a period such as from January 1, 1994 to December 31, 1996
"Predetermined time" shows the time of tabulation such as at the last day of the year 1999, the last day of the year 2000 or the last day of the year 2001
Generally, cumulative number of patent registrations (PTSP) includes patents that lapsed due to the expiration of its term. However, patent rights may be subtracted based on those that were extinguished as a result of cancellation decision due to opposition or invalidation decision due to invalidation trial, or patent rights may be subtracted based on those that were extinguished due to abandonment, withdrawal or rejection. Further, the number of patent registrations could be increased when subject to registration as a patent as a result of filing an appeal against the decision of rejection, but this is omitted here. It will be possible to judge that enterprises having a large value for the number of patent registrations (PTSP) are promptly making examination requests for patent applications and have acquired numerous patents.
In the embodiment of the present invention, upon counting the cumulative number of patent registrations (PTSP), the patent applications filed in 1994 onward up to a predetermined time when publications and registrations are available in the Japanese Patent Office's CD-ROM gazettes were counted regarding the patents subject to registration. If the data of patent publications and registrations can be obtained, these may be counted from an older year. Further, this is not limited to 1994 onward, and the respective indexes may be calculated by counting the data from a new year such as 2000 onward. When the cumulative number of patent registrations (PTSP) is counted from a recent year as described above, since a predetermined time will be required from the filing of patent applications to the grant thereof, there are cases where the number of patent registrations (PTRD) may be calculated as a greater value.
The number of patent registrations (PTRD) is obtained by the number-of-inventions acquisition means acquiring the number of patents subject to registration or number of claims of the patents as the number of inventions from registration gazettes (patent registration gazettes, publications of examined patent applications, publications of examined utility model applications, or utility model registration gazettes) of patents or utility models acquired from the database 20 or the like.

(2) Total number of effective patents (PSTE)

Total number of effective patents (PSTE) is an index for showing the total number of patent registrations obtained by subtracting the total number of patents or utility model registrations that extinguished due to reasons such as expiration of term from the total number of patents or utility models (cumulative number of patent registrations (PTSP)) subject to registration before a predetermined time among the patent applications or utility model applications filed by a specified enterprise within a specified period. Therefore, the total number of effective patents (PSTE) represents the total number of registered patents or registered utility models based on patent applications or utility model applications filed within a specified period that are still existing at a predetermined time such as each year end. The calculating formula thereof is shown below (Formula 2).

Total number of effective patents (PSTE)

= (total number of patent registrations among patents filed by a specified enterprise within a specified period) - (total number of extinguished patents that extinguished by a predetermined time among the patent registrations filed by a specified enterprise within a specified period)

= Cumulative number of patent registrations (PTSP) - (total number of extinguished patents that extinguished by a predetermined time among the patent registrations filed by a specified enterprise within a specified period) …(Formula 2)

Provided,

"Specified period" shows a period such as from January 1, 1994 to December 31, 1996

"Predetermined time" shows the time of tabulation such as at the last day of the year 1999, the last day of the year 2000 or the last day of the year 2001

Upon calculating the foregoing total number of effective patents (PSTE), for instance, the gazette acquisition means acquires the registration gazettes based on patent applications filed by a specified enterprise in a predetermined technical field within a specified period from a database. And, the number-of-inventions acquisition means acquires the number of patents subjected to, within a predetermined period, registration or number of claims of the patents as the number of inventions from the acquired registration gazettes. Further, the number-of-extinguished-inventions acquisition means acquires the number of extinguished inventions that extinguished within a predetermined period from the acquired number of inventions. And, the total number-of-effective-patents calculation means calculates the total number of effective patents by subtracting the number of extinguished inventions from the acquired number of inventions.

Incidentally, upon calculating the total number of effective patents (PSTE), patent applications filed by a specified enterprise in a predetermined technical field within a specified period may be targeted. Further, in the case of a co-owned patent right, the number of patents may be divided by the number of co-owners. Here, the number of inventions per applicant acquisition means acquires the number of patents subject to registration or number of claims of the patents as the number of registered inventions, acquires the number of applicants described in the acquired gazettes, and acquires the number of registered inventions per unit of applicant through dividing the acquired number of registered inventions by the number of applicants. And, the number of registered inventions acquisition means multiplies the acquired number of registered inventions per unit of applicant with the all acquired gazettes and acquiring the total number of registered inventions as the number of inventions.

Value of the total number of effective patents (PSTE) is increased by the number of patents newly subject to registration or newly registered utility models in each year, and is decreased by the number of patents or registered utility models that are extinguished in each year. Thus, when the number of extinguished registrations exceeds the number of new registrations, value of the total number of effective patents (PSTE) will decrease in comparison to the value of the previous year.

Value of the calculated total number of effective patents (PSTE) may be considered to show the technical strength of an enterprise in a monopolistic state. Therefore, generally speaking, an enterprise having a large total number of effective patents (PSTE) value is considered to have superior patent or technical strength. Incidentally, in recent years, for the purpose of reducing patent administrative expenses, many enterprises are abandoning patents which are considered, to be strategically insignificant, or rationalizing their strategy by carefully examining the subject matter of applications and thereby narrowing down the cased to be newly filed. Thus, it is necessary to keep in mind that the increase or decrease in the total number of effective patents (PSTE) does not necessarily directly represent the increase or decrease in the value of the overall patent stock.

(3) Total effective patent remaining ratio (patent granted renewal ratio; PSRR)

The total effective patent remaining ratio (PSRR) is an index obtained through dividing the calculated total number of effective patents (PSTE) by the cumulative number of patent registrations that were granted by a predetermined time among the patent applications filed by a specified enterprise within a specified period. The calculating formula thereof is shown below (Formula 3).

$$\text{Total effective patent remaining ratio (PSRR)}$$

$$= \text{(total number of effective patents (PSTE))} \,/\, \text{(cumulative}$$

$$\text{number of patent registrations (PTSP))} \ldots \text{(Formula 3)}$$

Provided,

"Specified period" shows a period such as from January 1, 1994 to December 31, 1996

"Predetermined time" shows the time of tabulation such as at the last day of the year 1999, the last day of the year 2000 or the last day of the year 2001

As shown in (Formula 3) above, upon calculating the total effective patent remaining ratio (PSRR), the total effective patent remaining ratio calculation means calculates the total effective patent remaining ratio through dividing the total number of effective patents (PSTE) by the number of inventions (cumulative number of patent registrations (PTSP)). Further, upon calculating the total effective patent remaining ratio (PSRR), patent applications in a predetermined technical field filed by a specified enterprise within a specified period may be targeted. Further, in the case of a co-owned patent right, the number of patents may be divided by the number of co-owners.

(4) Average remaining years of total effective patents (years to renewal patent granted expiration (average); PSAR)

Average remaining years of total effective patents (PSAR) is an index showing the average remaining period per patent right effectively remaining at a predetermined time. The calculating formula thereof is shown below (Formula 4).

$$\text{Average remaining years of total effective patents (PSAR)}$$

$$= [\Sigma_{p=1}^{P} \{ \text{(expiration date of term of remaining patents)} -$$

$$\text{(predetermined time)} \}] \,/\, \{ \text{(total number of effective patents}$$

$$\text{(PSTE))} \times \text{(average number of days in a year)} \} \ldots \text{(Formula 4)}$$

Provided,

p: Respective effective patents of a specified enterprise subject to registration within a specified period and remaining up to a predetermined time

P: Total number of the effective patents of the specified enterprise subject to registration within the specified period and remaining up to the predetermined time

Predetermined time: time of tabulation such as at the last day of the year 1999, the last day of the year 2000 or the last day of the year 2001

Upon calculating the foregoing average remaining years of total effective patents (PSAR), for instance, the gazette acquisition means acquires registration gazettes based on patent applications in a predetermined technical field filed by a specified enterprise within a specified period from a database. And, the remaining period calculation means calculates a term expiration date of each of rights of the acquired registration gazettes, and calculates the remaining period by subtracting the predetermined period from the term expiration date. Further, the patent stock index calculation means calculates a patent stock index by counting the calculated remaining period for all registration gazettes for patents surviving up to the predetermined period And, the average remaining period of total effective patents

calculation means calculates the average remaining period of total effective patents through dividing the patent stock index by the number of registration gazettes for patents surviving up to the predetermined period. Incidentally, upon calculating the remaining period, the number of claims described in the registration gazettes may be multiplied for calculating the remaining period. This is because the number of claims may also be considered to be the number of inventions.

Excluding some exceptions, the term of patent rights expires in 20 years from the filing date thereof. Thus, an enterprise or technical field having a large value of average remaining years of total effective patents (PSAR) shows that it has numerous patents that were filed recently, and signifies that such enterprise or technical field will be in a monopolistic state for many years to come.

Contrarily, an enterprise or technical field having a small value of average remaining years of total effective patents (PSAR) shows that it has numerous patents with a short remaining period, and represents the decline of monopolistic technical strength of that enterprise or technical field.

(5) Patent stock index (PSIN)

Patent stock index (PSIN) is an index showing the total period of the remaining period of patent rights surviving at a predetermined time such as at each year end. The calculating formula thereof is shown below (Formula 5).

$$\text{Patent stock index (PSIN)}$$
$$= [\Sigma_{p=1}^{P} \{(\text{expiration date of term of remaining patent rights}) - (\text{predetermined time})\}] / (\text{average number of days in a year})$$
$$= (\text{total number of effective patents (PSTE)}) \times (\text{average remaining years of total effective patents (PSAR)}) \dots(\text{Formula 5})$$

Provided,

"Predetermined time" shows the time of tabulation such as at the last day of the year 1999, the last day of the year 2000 or the last day of the year 2001

Upon calculating the foregoing patent stock index (PSIN), for instance, the gazette acquisition means acquires registration gazettes for patents surviving up to a predetermined period among the patent applications in a predetermined technical field filed by a specified enterprise within a specified period from a database. And, the remaining period calculation means calculates a term expiration date of each of rights of the acquired registration gazettes, and calculates the remaining period by subtracting the predetermined period from the term expiration date. Further, the patent stock index calculation means calculates a patent stock index by counting the calculated remaining period for all registration gazettes for patents surviving up to the predetermined period. Incidentally, upon calculating the remaining period, the number of claims described in the registration gazettes may be multiplied for calculating the remaining period.

As shown in (Formula 5) above, the patent stock index (PSIN) shows the total remaining period of patent effectively remaining. Assuming that the total number of effective, patents (PSTE) calculated among target enterprises to be compared is the same, it should be considered that the patent stock is different depending on the individual length of the remaining period.

Therefore, the patent stock index (PSIN) is quantification of the overall value obtained by multiplying the average remaining years of total effective patents (PSAR) to the total number of effective patents (PSTE). As a result of using this patent stock index (PSIN), it is possible to compare the power of enterprises in retaining patents. An enterprise having a large patent stock index (PSIN) value has many effectively surviving patents and long remaining period, and has strong, exclusive technical strength based on inventions such as patents. Contrarily, an enterprise having a small patent stock index (PSIN) value has few effectively surviving patents and short remaining period, and has small, exclusive technical strength based on inventions.

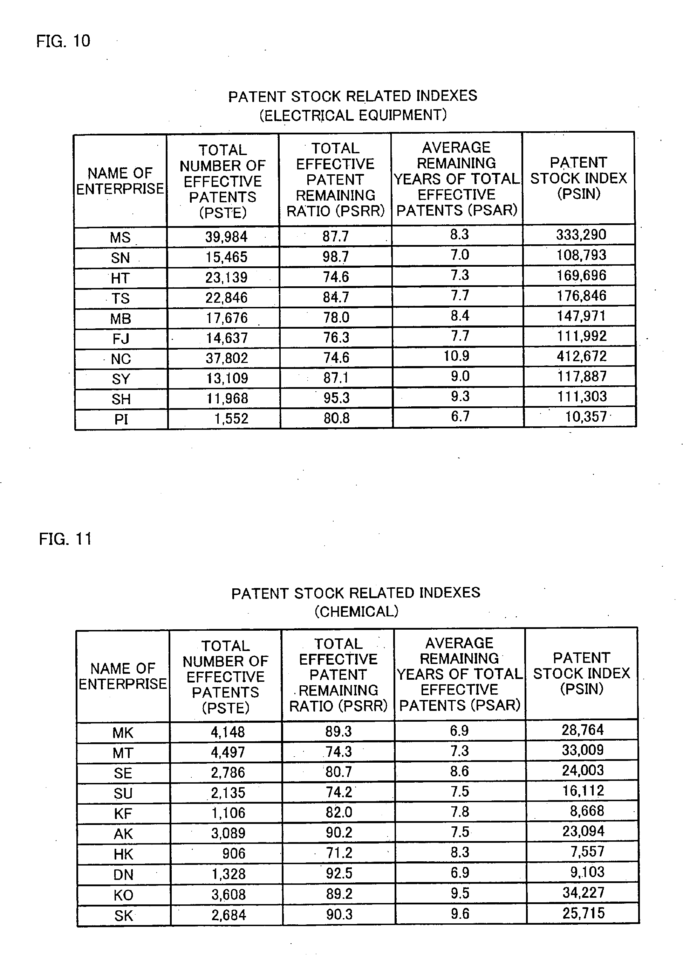

FIG. 10 and FIG. 11 show display examples of the patent stock related index of the present invention.

FIG. 10 is a chart comparably displaying the total number of effective patents (PSTE), total effective patent remaining ratio (PSRR), average remaining years of total effective patents (PSAR) and patent stock index (PSIN) of 10 companies belonging to the electrical equipment industry.

Foremost, in the electrical equipment industry, it is possible to tell from FIG. 10 that Company MS has a large total number of effective patents (PSTE) value, and Company NC has the second largest value. It is possible to presume that both of these companies have twice the number of effective patents in comparison to other companies, and have strong monopolistic power with respect to patents.

Moreover, according to FIG. 10, Company PI has a small total number of effective patents (PSTE) value. Thus, there is no choice but to say that this company has weak monopolistic power based on patents. Nevertheless, Company PI may have monopolistic power based on strong patents in other technical fields. Therefore, when conducting a research per technical field, there are cases where it may not be possible to accurately compare enterprises merely by reviewing the value of total number of effective patents (PSTE), but it is possible to make a comparison in a specified technical field.

According to FIG. 10, Company SN and Company SH are enterprises having a high total effective patent remaining ratio (PSRR) value. Since the indexes of FIG. 10 are calculated based on patent registration gazettes issued in 1994 onward, it is evident that Company SN is retaining 98.7% of its patents among the patents subject to registration which were filed in 1994 onward without abandoning the same. Further, Company SH is also retaining 95.3% of its patents among the patents subject to registration which were filed in 1994 onward. Accordingly, it is possible to know that both companies are carefully retaining their patents subject to registration. From this fact also, it is possible to presume that both companies are acquiring patents of technically important inventions.

Contrarily, the calculated total effective patent remaining ratio (PSRR) of Company HT and Company NC are both 74.6%, and it is possible to know that these companies are abandoning roughly 1/3 of their patents. From this, it is possible to assume that these companies acquired patents that were not technically effective, or, since the technical trend in these companies changed significantly, inventions that were important at the time of filing became obsolete in the product strategy upon the registration thereof.

Further, if the total effective patent remaining ratio (PSRR) value is small, this means that patent rights have been abandoned at an early stage in order to cut back on the annuity payment of patents, and it is possible to judge the trend of the enterprise to be researched with respect to its patent strategy.

Moreover, according to FIG. 10, Company NC has a dominant value of average remaining years of total effective patents (PSAR), and such value at 10.9 years is an extremely high value in comparison to the other companies. This shows that Company NC is achieving registration of patent applications very quickly. For instance, with respect to the patent applications filed by Company NC, when calculating the index (average years required for registration (PTMY)) showing the average number of years required for the registration regarding the patents subject to registration among the patent applications filed in the year 2002, a short period of 3.9 years is obtained.

The average years required for registration (PTMY) value of other companies in the electrical equipment industry is roughly 6.1 to 8.9 years. Therefore, when consideration the average years required for registration (PTMY) value of 3.9 years of Company NC, it is possible to judge that Company NC is able to realize the registration from the filing of patent applications in an extremely short period of time, and this relates closely to the fact that the average remaining years of total effective patents (PSAR) value is also dominantly high.

Contrarily, the average remaining years of total effective patents (PSAR) value of Company PI is small at 6.7 years. From this fact, it is possible to presume that if Company PI does not acquire new patents, its overall technical strength will decline.

Further, when observing the patent stock index (PSIN) value shown in FIG. 10, Company NC has a dominantly high numerical value in comparison to other companies. Although the total number of effective patents (PSTE) value of Company NC was ranked second place in FIG. 10, since its average remaining years of total effective patents (PSAR) value is high, the numerical value shows that Company NC has monopolistic technical strength based on overall inventions.

Company MS is the enterprise having the second highest patent stock index (PSIN) value. The total number of effective patents (PSTE) value of Company MS is also high. When considering these numerical values, Company NC and Company MS have extremely strong monopolistic technical strength, and it could be said that these companies created a patent kingdom.

Contrarily, the patent stock index (PSIN) value and total number of effective patents (PSTE) value of Company PI are both small, and the average remaining years of total effective patents (PSAR) value is also small. Thus, it is possible to judge that Company PI is an extremely weak company in terms of monopolistic technical strength based on inventions.

FIG. 11 is a chart comparably displaying the total number of effective patents (PSTE), total effective patent remaining ratio (PSRR), average remaining years of total effective patents (PSAR) and patent stock index (PSIN) of 10 companies belonging to the chemical industry.

In the chemical industry, it is possible to tell that Company MT has the largest total number of effective patents (PSTE) value, and Company MK has the second largest value. Although it is possible to presume that the Company MT and the Company MK comprehensively have monopolistic technical strength, it is evident that the number of patents is one digit less in comparison to the total number of effective patents (PSTE) value of the electrical equipment industry in FIG. 10. Therefore, it is possible to read that there is a great difference in the total number of effective patents (PSTE) value depending on the industry.

The reason the total number of effective patents (PSTE) value of Company HK is small in FIG. 11 is considered to be because the total effective patent remaining ratio (PSRR) is low at 71.2%, and the patent rights- are being abandoned at a relatively early stage. With respect to the total effective patent remaining ratio (PSRR), further to Company HK having abandoned roughly 1/3 of their patents as described above, Company SU and Company MT are also abandoning roughly 1/3 of their patents at a total effective patent remaining ratio (PSRR) of 74.2% and 74.3%. In the chemical industry also, it is possible to differentiate enterprises that are carefully retaining patents and enterprises that are abandoning patents at an early stage, and it is also possible to discover differences in the trend of the respective enterprises regarding patents.

Further, as shown in FIG. 11, Company SK and Company KO are enterprises having a high total effective patent average remaining ratio (PSRR) value in the chemical industry. And the average remaining years of total effective patents (PSAR) value of both companies is respectively 9.6 years and 9.5 years, and it is possible to read that both companies are maintaining patents rights for a relatively long period of time.

Moreover, when observing the patent stock index (PSIN) shown in FIG. 11, Company KO is ranked first place with the highest value. Although the calculated total number of effective patents (PSTE) value of Company KO was ranked third place in FIG. 11, the patent stock index (PSIN) value is ranked first place since the average remaining years of total effective patents (PSAR) value is large and the average term of patent rights is long.

Company MT with the second highest patent stock index (PSIN) value has the highest total number of effective patents (PSTE) value in FIG. 11. It is possible to know that both Company KO and Company MT have strong monopolistic technical strength. It could be said that such enterprises having a strong technical competitive position can be evaluated highly.

Further, as shown in FIG. 11, since Company DN has a small value of average remaining years of total effective patents (PSAR) at 6.9 years, the patent stock index (PSIN) value is also small. Similarly, in the case of Company HK, since the total number of effective patents (PSTE) value is small at 906 patents in comparison to other companies, the patent stock index (PSIN) value is also small. Like this, enterprises having a small patent stock index (PSIN) could lose the technical competition unless they immediately acquire new patent right.

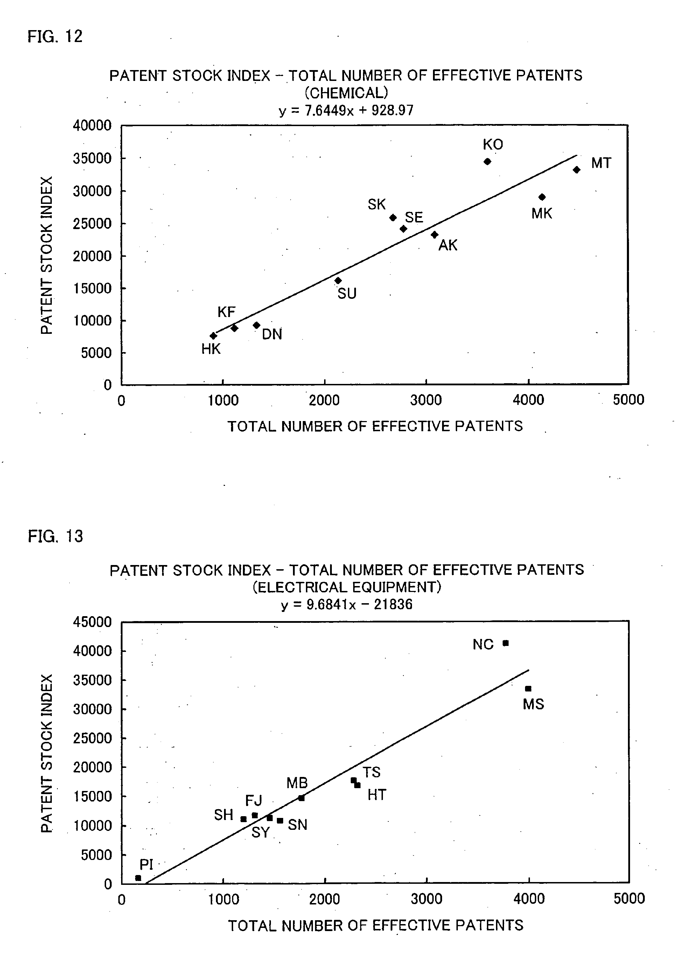

FIG. 12 is a diagram showing the relationship of the patent stock index (PSIN) and total number of effective patents (PSTE) in the chemical industry.

Further, FIG. 13 is a diagram showing the relationship of the patent stock index (PSIN) and total number of effective patents (PSTE) in the electrical equipment industry.

In the examples shown in FIG. 12 and FIG. 13, the positions of the respective companies are plotted with the horizontal axis (x axis) as the total number of effective patents (PSTE), and the vertical axis (y axis) as the patent stock index (PSIN). Incidentally, in FIG. 12 and FIG. 13, abbreviations such as HK and MT are provided in order to identify the plotted companies. The straight line shown in FIG. 12 and FIG. 13 is a regression line showing the average value of the position of each of the plotted companies, and a primary regression line of a linear expression is represented at the upper part of FIG. 12 and FIG. 13.

As shown in FIG. 12 and FIG. 13, in both the chemical industry and electrical equipment industry, there is a correlation where an enterprise having a large total number of effective patents (PSTE) value also has a large patent stock index (PSIN) value. Accordingly, in order to achieve a large patent stock index (PSIN) value that can also be considered the amount of total assets of patents, it is important to increase the total number of effective patents (PSTE).

In the chemical industry shown in FIG. 12, the total number of effective patents (PSTE) value of Company KO is relatively high, and the patent stock index (PSIN) value is also high. From this, it is possible to judge that Company KO has numerous existing patents and the term of patents is also long, and, therefore, has strong monopolistic technical strength and strong power based on patent rights.

Contrarily, in the cases of Company HK and Company KF shown in FIG. 12, the total number of effective patents (PSTE) value is small, and the patent stock index (PSIN) value is also small. From this, it is possible to know that these companies have weak monopolistic technical strength and weak power based on patent rights.

In the case of the electrical equipment industry shown in FIG. 13, the total number of effective patents (PSTE) value of Company NC and Company MS is relatively large, and the patent stock index (PSIN) value is also large. From this, it is possible to judge that these companies have numerous existing patents and the term of patents is also long, and, therefore, has strong monopolistic technical strength and strong power based on patent rights.

Nevertheless, when comparing Company NC and Company MS, although there is no significant difference in the total number of effective patents (PSTE), Company NC such a much higher value when comparing the patent stock index (PSIN) values. From this, it is possible to know that patents of Company NC have a much longer term than the patents of Company MS.

In the case of Company PI in FIG. 13, the total number of effective patents (PSTE) value is small, and the patent stock index (PSIN) is also small. From this, it is possible to consider that this company has weak monopolistic technical strength based on inventions in comparison to the other companies shown in FIG. 13, and that it is extremely weak in terms of patents.

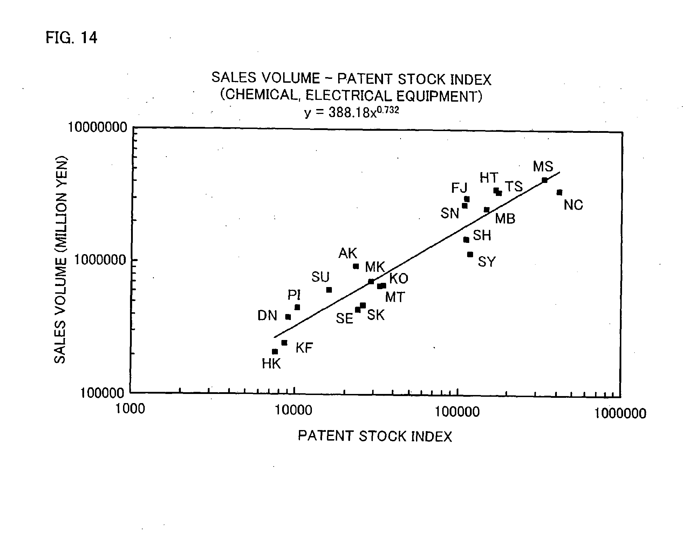

FIG. 14 is a diagram showing the relationship of the patent stock index (PSIN) and sales volume in the chemical industry and electrical equipment industry.

In FIG. 14, the positions of the respective companies are plotted by representing the patent stock index (PSIN) with a logarithm on the horizontal axis, and representing the sales volume (SALES) with a logarithm on the vertical axis. The straight line of both logarithm scales shown in FIG. 14 is a regression line showing the dispersion of positions of each of the plotted companies, and the calculating formula of such regression line is shown at the upper part of FIG. 14. Incidentally, in FIG. 14, abbreviations such as AK and MS are provided in order to identify the plotted companies.

In FIG. 14, upon plotting and observing the distribution of each company in the chemical industry and electrical equipment industry, it is possible to read that both the chemical industry and electrical equipment industry have a similar correlation. Most of the companies dispersed at the upper right portion of the regression line shown in FIG. 14 belong to the electrical equipment industry, and all of the companies excluding Company PI (electrical equipment industry) distributed at the lower left portion are companies belonging to the chemical industry.

As shown in FIG. 14, when representing the relationship of the patent stock index (PSIN) and sales volume (SALES) based on industry in a chart, it is evident that this can be classified fairly clearly. Further, as shown in FIG. 14, when representing both the patent stock index (PSIN) and sales volume (SALES) on both logarithm graphs, the respective companies in the electrical equipment industry and chemical industry tend to be distributed roughly in a straight line. From this, an enterprise having a large patent stock index (PSIN) value tends to have a large sales volume (SALES), and, contrarily, an enterprise having a small patent stock index (PSIN) value tends to have a small sales volume (SALES).

In other words, according to FIG. 14, in a case where a certain enterprise wishes to increase its sales volume (SALES), generally speaking, it is necessary to increase the number of patent rights that it owns. And, it could be said that the increase in the number of owned patent rights will.lead to the increase in the sales volume.

Moreover, enterprises positioned above the regression line shown in FIG. 14 have effective patent rights, and therefore, it is possible to consider that these enterprises are increasing their sales volume. Further, it is also possible that these enterprises are increasing their sales volume since they have strong sales force based on brands.

Meanwhile, it is possible to judge that enterprises positioned below the regression line are focusing on research and development but not leading to increase in sales, or the sales volume is not increasing since these enterprises are not effectively utilizing their intellectual property.

As shown in FIG. 14, although Company NC has the highest patent stock index (PSIN) value in the electrical equipment industry, it is positioned below the regression line. Therefore, in the case of Company NC, it is possible to read that its sales volume (SALES) is not that high in comparison to its patent stock index (PSIN) value.

In the case of Company MS in the electrical equipment industry, it has a high patent stock index (PSIN) value and high sales volume. Company MS is positioned right on the regression line showing the average value of the respective companies, and it is possible to judge that Company MS is a company having an average monopolistic technical strength based on inventions.

Further, each of the companies TS, HT, FJ and SN shows in FIG. 14 is positioned above the regression line representing the average value. From this, it is possible to read that these companies have a high sales volume (SALES) in comparison to the patent stock index (PSIN) value.

Moreover, Company SH and Company SY shown in FIG. 14 are both positioned below the regression line representing the average value. From this, it is possible to read that these companies have a low sales volume (SALES) in comparison to the patent stock index (PSIN) value.

Further, Company PI shown in FIG. 14 has an extremely low patent stock index (PSIN) and a low sales volume in the electrical equipment industry. Nevertheless, when comparing this company with the other companies belonging to the chemical industry, although the patent stock index (PSIN) value is somewhat low, it is positioned above the regression line representing the average value in terms of the sales volume. Therefore, Company PI should not necessarily be judged as being inferior.

As described above, when comparing the relationship of the patent stock index (PSIN) and sales volume including different industries, it is evident that there may be cases where a different judgment result is obtained in comparison to cases where comparison is made within the same industry. Therefore, it is necessary to keep this in mind when making a comparison with other business categories, and it can also be said that it is difficult to directly compare companies across different industries.

Further, as shown in FIG. 14, the patent stock index (PSIN) value and sales volume value of the respective enterprises belonging to the chemical industry are smaller than the values of the electrical equipment industry. Further, in the chemical industry, it is possible to read that Company AK has a high sales volume in comparison to its patent stock index (PSIN) value. Moreover, Company SU and Company DN are positioned above the regression line representing the average value, and both companies are showing a high sales volume in comparison to the patent stock index (PSIN) value.

Further, in the chemical industry, the respective companies of KO, MT, SK, SE, KF and HK are positioned below the average line, and it is possible to read that 6 companies, which is 3 companies more than the 3 companies falling below average in the electrical equipment industry, are located below the regression line. As a result of illustrating this on a graph, it is possible to clearly read the differences per industry and per enterprise, and more accurately conduct enterprise value evaluation.

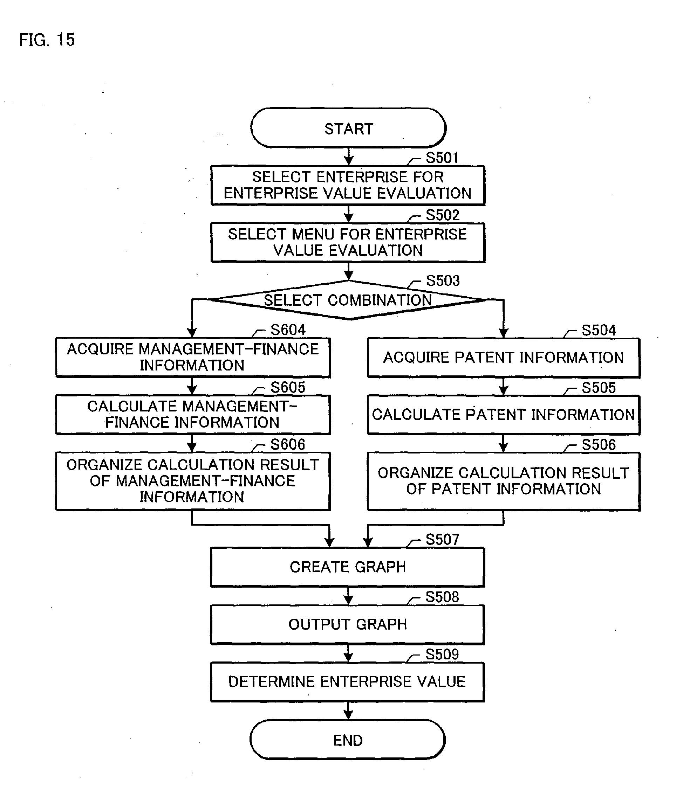

FIG. 15 shows a flowchart of calculating and outputting the respective indexes of total number of effective patents, total effective patent remaining ratio, average remaining years of total effective patents or patent stock index.

At S501 "select enterprise for enterprise value evaluation", the information processing means 380 receives the input of a display command of a screen for selecting an enterprise from a user via the input means 370 such as a keyboard and the bus 399. The information processing means 380 reads the display data upon selecting the enterprise from the recording means 384 based on such command, converts this into a display image signal, and outputs such signal to the display interface 373. The display interface 373 that acquired the display data from the information processing means 380 converts and outputs the display data corresponding to the display means 372. The display means 372 displays a screen based on the display data input from the display interface 373 and notifies the user.

The user, while viewing the company selection screen displayed on the display means 372, inputs the information for specifying one or more enterprises to be researched via the input means 370. Here, the information to be input may be the enterprise name, enterprise code, or an enterprise may be selected from the enterprise selection screen. Information for specifying the enterprise input by the user via the input means 370 is read by the information processing means 380 via the bus 399.

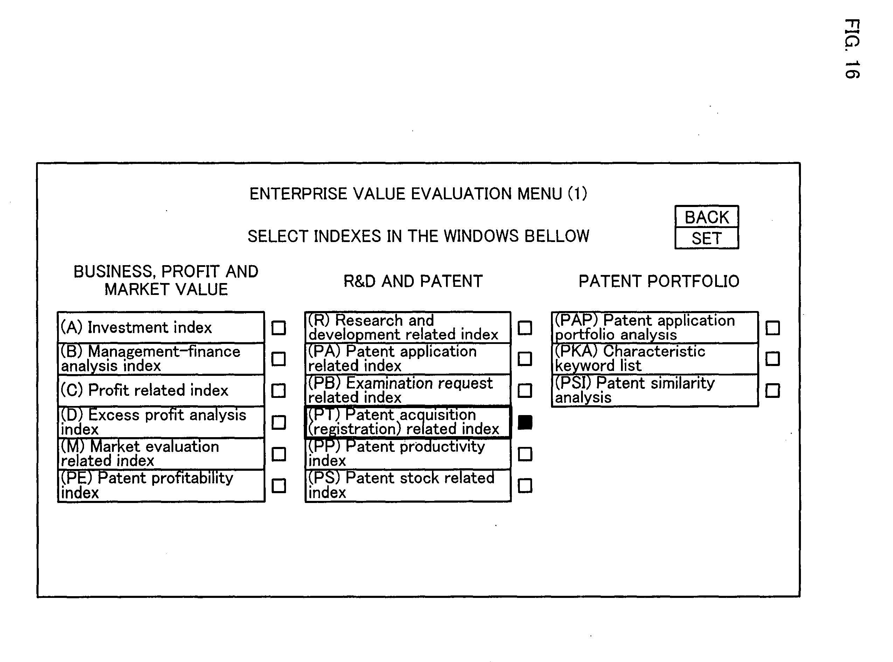

When the information processing means 380 receives the input of enterprise specifying information, the information processing means 380 reads the display data of the display menu for selecting the type of index to evaluate the enterprise value from the recording means 384, converts this into a display image signal, outputs such signal to the display interface 373, and, for example, displays the enterprise value evaluation menu shown in FIG. 16 on the display means 372.

Next, at S502 "select menu for enterprise value evaluation", the user, while viewing the enterprise value evaluation menu displayed on the display means 372, selects the desired index for evaluating the enterprise value and inputs such index.

When selecting an index from the enterprise value evaluation menu shown in FIG. 16 upon judging the enterprise value, the user selects a desired index from the selection menu of "business, profit, market value" or "R&D, patent", or "patent portfolio". In the example shown in FIG. 16, the user is selecting the item of "(PT) patent acquisition (registration) related index" belonging to the field of "R&D, patent".

When the user inputs information for selecting the index of "R&D, patent", such input information is conveyed to the information processing means 380, the command for displaying a selection mark at the portion of the index selected by the user is output to the display interface 373, and information for displaying the respective indexes existing at a lower level in the form of a pulldown menu is output to the display interface 373. Incidentally, in the example shown in FIG. 16, the mark of the selected item is changed from a white square to a black square.

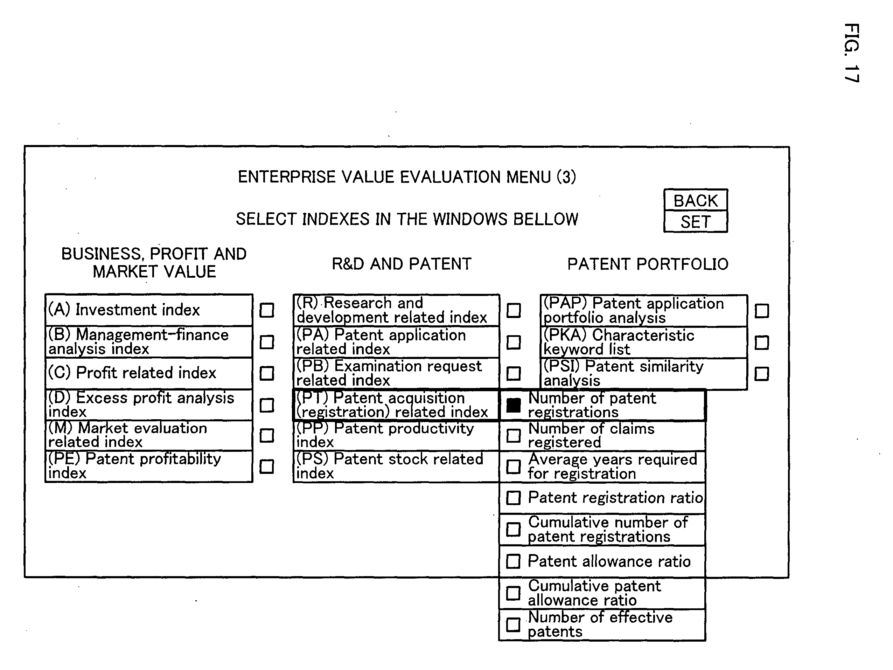

FIG. 17 shows a display example displaying the respective indexes existing in a lower level of "R&D, patent" in the form a pulldown menu.

The user selects a desired index to be calculated from the respective indexes displayed on the display means 372. With the example illustrated in FIG. 17, the user is selecting the index of "number of patent registrations (PTRD)" representing the number of patents of a specified enterprise subject to the registration within a specified period.

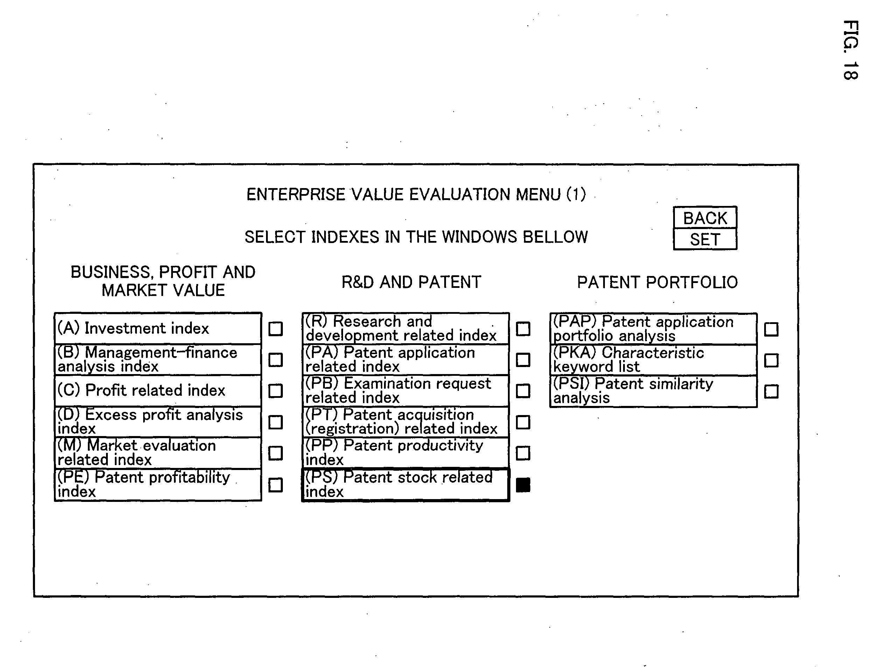

Further, when the user wishes to calculate the "(PS) patent stock related index" falling under the field of "R&D, patent", as shown in FIG. 18, the user will select "(PS) patent stock related index" from the pulldown menu.

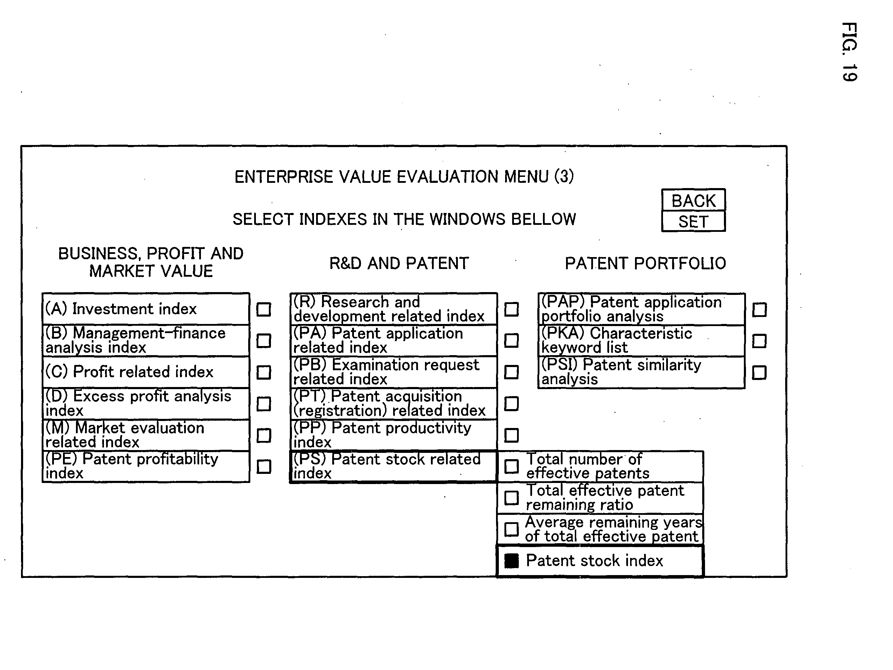

When the user inputs information for selecting the "(PS) patent stock related index", the information processing means 380 that acquired such input information outputs a command for displaying a selection mark at the portion of the index selected by the user to the display interface 373, and, outputs information for displaying the respective indexes belonging to a lower level of the "(PS) patent stock related index" as shown in FIG. 19 to the display interface 373 in the form of a pulldown menu.

The user inputs information for selecting the index of "patent stock index" from the pulldown menu displayed as shown in FIG. 19. Then, this input information is conveyed to the information processing means 380. The information processing means 380 sets a flag for deciding the parameter of the index to be calculated, displays a selection mark at the portion of the index selected by the user, and notifies the user of the set information.

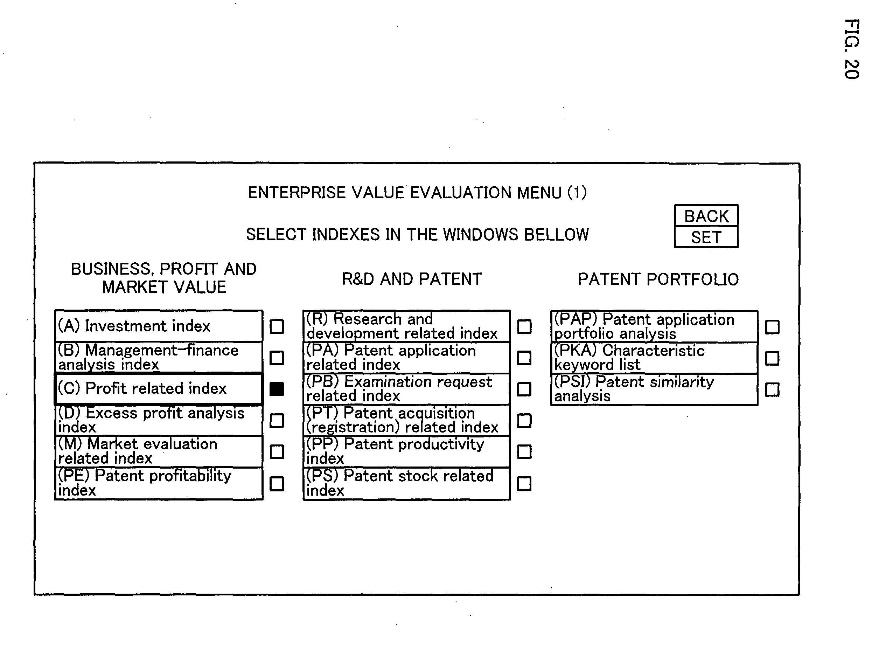

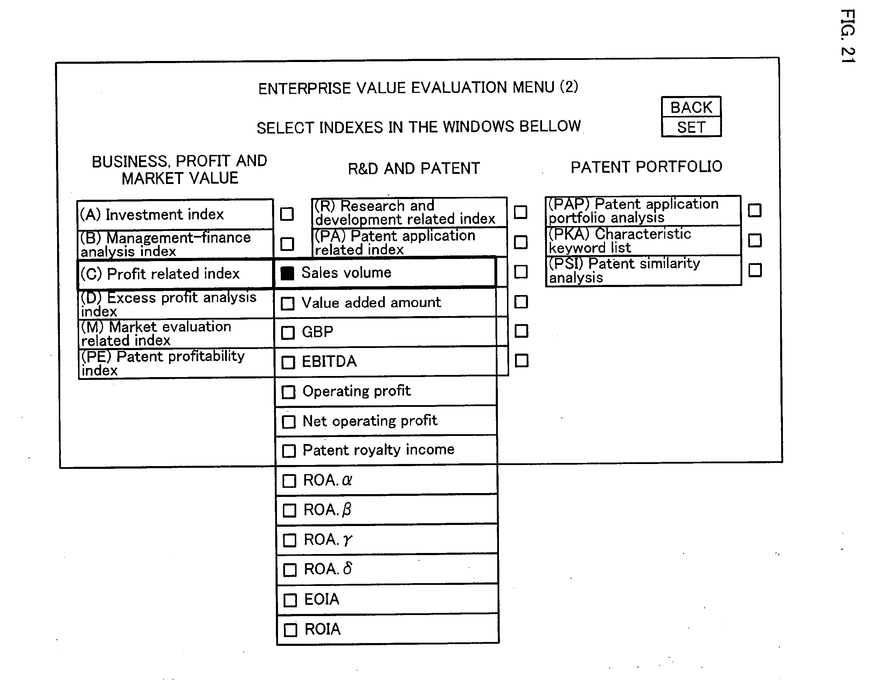

When the user wishes to conduct a research upon mutually associating the indexes of inventions and the business, profit or market value information of a predetermined enterprise, the user selects "(C) profit related index" from the selection menu of "business, profit, market value" shown in FIG. 20. Then, the information processing means 380 outputs a command for displaying on the display means 372 the pulldown menu indicating the items relating to the "(C) profit related index" shown in FIG. 21. The user selects a desired profit index from the pulldown menu displayed on the display means 372. In the example shown in FIG. 21, a case where the "sales volume" is selected is shown.

When the user inputs information for selecting the item of "sales volume" of "(C) profit related index", such input information is conveyed to the information processing means 380. The information processing means 380 sets a flag for deciding the operation formula for calculating the index, displays a selection mark at the portion of the index selected by the user, and notifies the user of the set information.

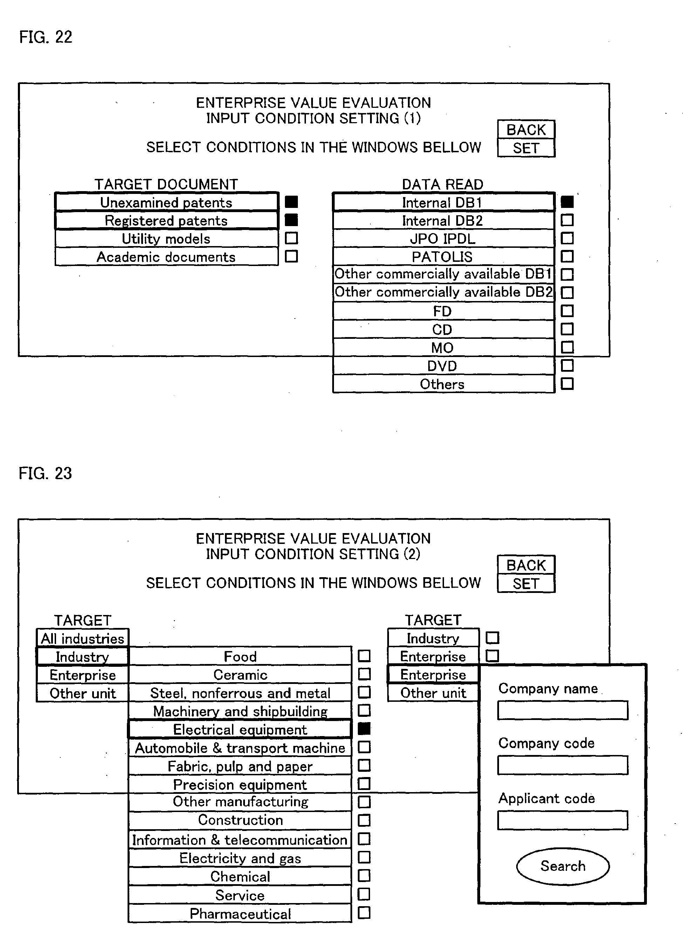

When the user selects the "set" button and the selection processing of the type of index for evaluating the enterprise value is ended, the information processing means 380 reads the display data of the display screen for setting the input conditions upon evaluating the enterprise value from the recording means 384, converts this into a display image signal, and outputs such signal to the display interface 373, and, for example, displays on the display means 372 the enterprise value evaluation input condition setting screen shown in FIG. 22.

The user, while viewing the enterprise value evaluation input condition setting screen displayed on the display means 372, selects and inputs the desired conditions for evaluating the enterprise value.

For example, the user, based on the display of the, enterprise value evaluation input condition setting screen shown in FIG. 22, selects the conditions of "target document" and "reading of data" upon calculating the index for judging the enterprise value. In the example shown in FIG. 22, the user is selecting "unexamined patent applications" and "registered patents" as the conditions of the "target document". Moreover, in the example show in FIG. 22, the user is selecting "Internal DB1" as the condition of "reading of data".

When the user inputs the various conditions of "target document" and "reading of data", such input information is conveyed to the information processing means 380. The information processing means 380 sets a flag of the items input by the user regarding the conditions of the "target document" and "reading of data", displays a selection mark at the portion of the index selected by the user, and notifies the user of the set information.

When the user selects the "set" button and the input regarding the conditions of the "target document" and "reading of data" is completed, the information processing means 380 subsequently reads the display data of the enterprise value evaluation input condition setting screen shown in FIG. 23 from the recording means 384, and outputs a command for displaying this on the display means 372 via the display interface 373.

The user, while viewing the enterprise value evaluation input condition setting screen displayed on the display means 372, selects a desired enterprise to be evaluated. In the example shown in FIG. 23, the user is selecting "electrical equipment industry" among the "industries" to become the large classification among the target of enterprise evaluation. Further, the user may also select "enterprise" as the detailed classification of individual enterprises among the target of enterprise value evaluation, and designate input conditions such as the "enterprise name", "enterprise code", "applicant code" and so on. When the user, while viewing this screen, selects the "target" on the right side and further selects the enterprise, such user will input the enterprise name or enterprise code and applicant code.

When the user selects the "set" button and ends the input condition setting of the enterprise value evaluation, such input information is conveyed to the information processing means 380. The information processing means 380 sets a flag of the enterprise to become the "target" input by the user, displays a selection mark at the portion of the index selected by the user, displays information such as the set enterprise name, enterprise code and applicant code on the display means 372, and notifies the user of the set information.

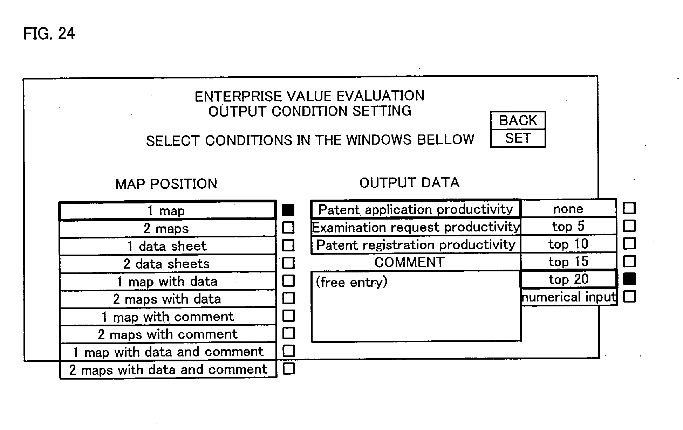

When the user selects the "set" button and the setting of the input conditions of the enterprise value evaluation is ended, the information processing means 380 subsequently reads the display data of the enterprise value evaluation output condition setting screen shown in FIG. 24 from the recording means 384, and outputs a command for displaying this on the display means 372 via the display interface 373. The user, while viewing the enterprise value evaluation output condition setting screen displayed on the display means 372, selects a desired display mode. In the example shown in FIG. 24, "single map" is selected as the information relating to the "map position", the "patent application productivity" is selected as the "output data", and "upper 20" is selected as the volume of information to be output and displayed.

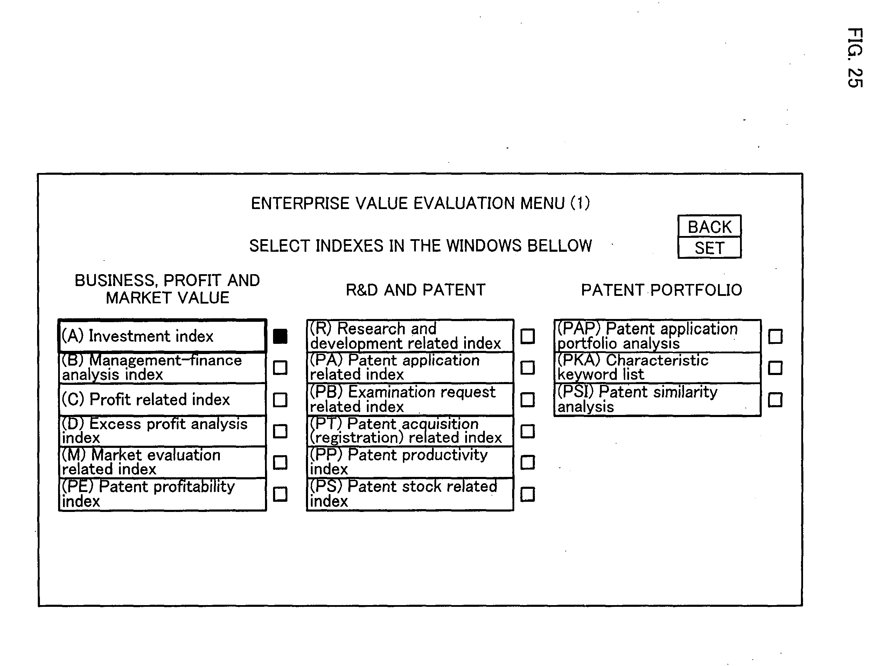

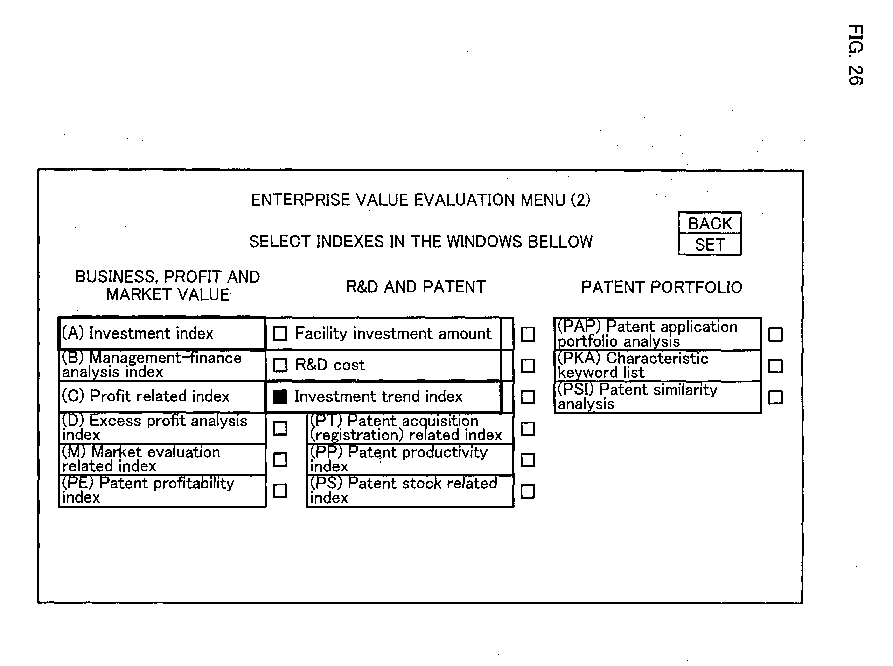

When the user wishes to conduct a research upon mutually associating "business, profit, market value" and "R&D, patent", the user selects "(A) investment index" from the selection menu of "business, profit, market value" shown in FIG. 25. Then, the information processing means 380 outputs a command for displaying on the display means 372 the pulldown menu indicating the items relating to the "(A) investment index" shown in FIG. 26. The user selects a desired profit related, index from the pulldown menu displayed on the display means 372. In the example shown in FIG. 26, a case where the "investment trend index" is selected is shown.

When the user inputs information for selecting the item of "investment trend index" related to "(A) investment index", such input information is conveyed to the information processing means 380. The information processing means 380 sets a flag for deciding the operation formula for calculating the index, displays a selection mark at the portion of the index selected by the user, and notifies the user of the set information.

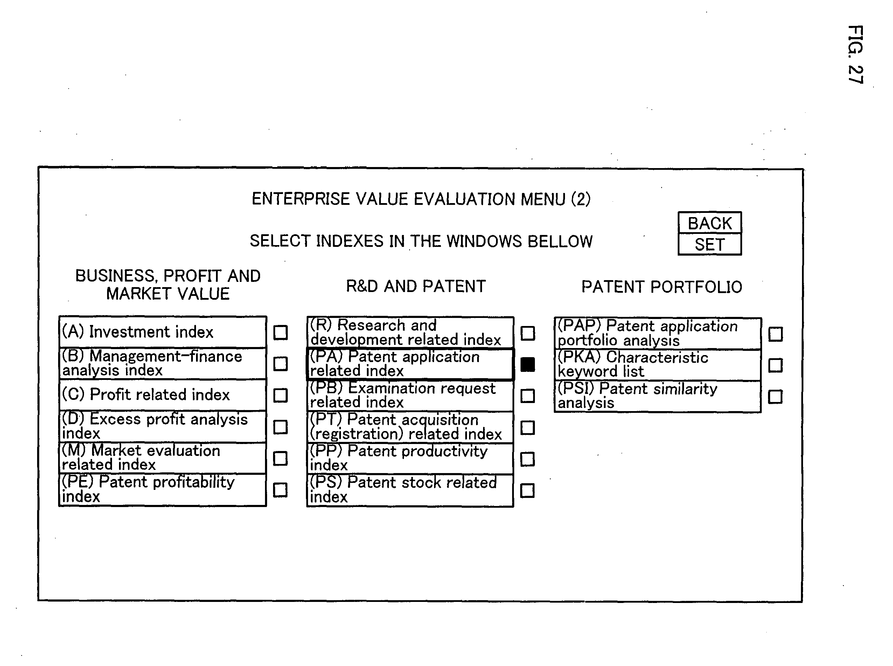

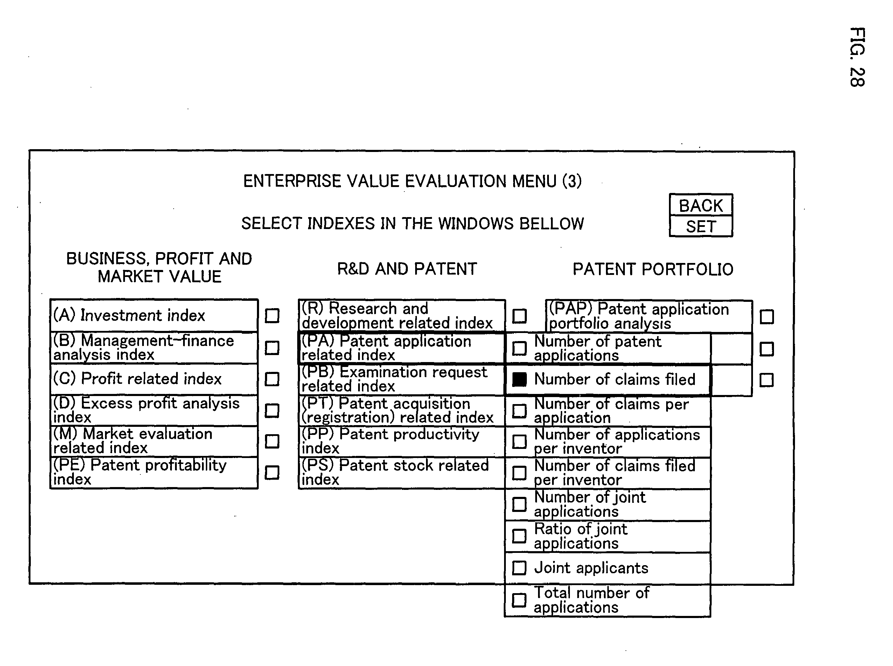

The screen shown in FIG. 27 illustrates an example where the selected the item of "(PA) patent application related index" from the selection menu of "R&D, patent". When the user selects the item of "(PA) patent applications", the pulldown menu shown in FIG. 28 is displayed on the display means 372. In the example shown in FIG. 28, a state is shown where the "number of claims filed" is selected from the selection menu of "(PA) patent application related index".

When the user selects the "set" button and the setting of the enterprise value evaluation output conditions is ended, processing to the performed by the information processing means 380 proceeds to the processing of S503 "select combination" shown in FIG. 15. When the user designates the implementation of operation relating to management-finance information such as "business, profit, market value", the processing to be performed by the information processing means 380 proceeds to the processing of S604 "acquire management-finance information", and, when the user designates the implementation of operation of "R&D patent" or "patent portfolio", the processing to be performed by the information processing means 380 proceeds to the processing of S504 "acquire patent information" shown in FIG. 15.

Incidentally, when the user only designates an independent operation of the "number of patent registrations" or the like, the information processing means 380 does not select the combination processing and implements only the processing of S504 onward.

For example, when the user designates the operation of the "number of patent registrations" from the selection menu of "R&D, patent", at S504, the information processing means 380 acquires the patent gazettes of the respective enterprises and information relating thereto from the database 20 based on the operation processing of the "R&D, patent" and information relating to the designated enterprise, and performs processing for extracting the IPC sub-classes, number of patent applications, number of claims in a patent application and other information required for the operation. After the acquisition processing of patent information is ended, the processing to be performed by the information processing means 380 proceeds to the processing of subsequent S505 "calculate patent information".

At S505, the information processing means 380 performs processing for calculating the desired index of the user based on the patent information acquired at S504, the operation formula of "R&D, patent" input by the user, and the calculating formula to which a flag has been set based on the enterprise name or the like.

When the operation processing of the index relating to patents is ended at S505, the processing to be subsequently performed by the information processing means 380 proceeds to the processing of S506 "organize calculation result of patent information".

At S506, the information processing means 380 classifies the specified enterprise into a predetermined category based on the operation result of the index relating to patents, and further performs operation processing for predetermined ranking or discrimination, and then organizes the various operation results.

When the organization of the various operation results is ended at S506, the processing to be performed by the information processing means 380 proceeds to the subsequent processing of S507 "create graph".

Meanwhile, in a case where the user selects "(A) investment index" from the "business, profit, market value" (refer to FIG. 26), and further selects "investment trend index", and desires the combination of the operation of "R&D, patent" and other items such as the "business, profit, market value", the processing to be performed by the information processing means 380 proceeds to S604 "acquire management-finance information".

At S604, the information processing means 380 acquires various types of information from the database 20 such as the information showing the size of the enterprise, finance information of the enterprise, and combined information of the enterprise, and operates the management-finance information at the subsequent S605 "calculate management-finance information".

When the operation processing of management-finance information is ended at S605, the processing to the subsequently performed by the information processing means 380 will proceed to S606 "organize calculation result of management-finance information" in order to perform the operation processing of management-finance information, and then the routine proceeds to the subsequent S507.

At S507, the information processing means 380 creates a chart or graph by applying the operation result of the patent information calculated at S505, various operation results organized at S506, operation result of the management-finance information operated at S605, or operation result of the various types of management-finance information organized at S606 into a display format according to the index or the operation result thereof, and coverts this into display data.

Next, at S508 "output graph", the information processing means 380 outputs the display data of the chart or graph created at S507 to the display interface 373, and displays this on the display means 372.

By the user perusing the chart or graph display at S508, the user will be able to easily and accurately judge, with a unique index, the enterprise value based on the diversification of inventions in the respective enterprises, competitive position relating to inventions, validity of the enterprise value, or the relationship between such unique information concerning inventions and the management-finance information.

Depending on the items of enterprise evaluation designated by the user, there may be cases where the information processing means 380 performs a more detailed ranking in order to judge the enterprise value. In such a case, the information processing means 380 will read the predetermined threshold or the like at S509 "determine enterprise value" to judge the enterprise value, thereafter output the numerical value or graph thereof, and then end the calculation processing of the various indexes.

Industrial Applicability

The present invention comprises:

gazette acquisition means for acquiring registration gazettes based on patent applications filed by a specified enterprise within a specified period;
number-of-inventions acquisition means for acquiring the number of patents subjected to, before a predetermined time, registration or number of claims of the patents as the number of inventions from the acquired registration gazettes;
number-of-extinguished-inventions acquisition means for acquiring the number of extinguished inventions that extinguished before a predetermined time from the acquired number of inventions;
total number-of-effective-patents calculation means for calculating the total number of effective patents by subtracting the number of extinguished inventions from the acquired number of inventions;
total effective patent remaining ratio calculation means for calculating the total effective patent remaining ratio through dividing the calculated total number of effective patents by the number of inventions; and
output means for outputting the calculated total effective patent remaining ratio to display means, printing means, recording medium, or another telecommunications device via a communication line.

Therefore, it is possible to know the attitude of enterprises to patents.
For instance, it is possible to judge that an enterprise having a high total effective patent remaining ratio is carefully and effectively utilizing the granted patents. Contrarily, it is possible to assume that an enterprise having a low total effective patent remaining ratio has abandoned its patents since the technical field became obsolete at the time of registration and such patents became unnecessary at an early stage, or this technical field became unnecessary since the enterprise changed courses to a different technical field, and it is thereby possible to judge that such enterprise filed wasteful applications and examination requests, and was granted patents without giving sufficient consideration at the time of filing.
Further, according to the present invention,
the number of inventions per applicant acquisition means acquire the number of patents subjected to, before a predetermined time, registration or number of claims of the patents as the number of registered inventions from each of said acquired registration gazettes, and acquire the number of applicants described in each of said acquired gazettes, and acquire the number of registered inventions per unit of applicant through dividing said acquired number of registered inventions by the number of applicants.
Moreover, the number of registered inventions acquisition means count said acquired number of registered inventions per unit of applicant for said all acquired gazettes and acquiring the total number of registered inventions as the number of inventions.
Therefore, even if the technology becomes sophisticated and complex and the number of joint inventions and joint applications increases, it is possible to accurately judge the number of registered inventions of an enterprise and improve the reliability of data.
Further, according to the present invention, the gazette acquisition means of the present invention acquire registration gazettes based on patent applications in a predetermined technical field filed within a specified period by a specified enterprise from a database.
Therefore, it is possible to evaluate the patents of an enterprise upon specifying a predetermined technical field.
Further, the present invention comprises:

gazette acquisition means for acquiring registration gazettes for patents surviving up to a predetermined time among the patent applications filed by a specified enterprise within a specified period from a database;
remaining period calculation means for calculating a term expiration date of each of rights of said acquired registration gazettes, and calculating the remaining period by subtracting the predetermined time from said term expiration date;
patent stock index calculation means for calculating a patent stock index by counting said calculated remaining period for all registration gazettes for patents surviving up to the predetermined time; and
output means for outputting said calculated patent stock index to display means, printing means, recording medium, or another telecommunications device via a communication line.

Therefore, it is possible to compare the power of enterprises for retaining patents by using a patent stock index.
An enterprise having a high patent stock numerical value has many effectively surviving patents and long remaining period, and has strong, exclusive technical strength based on inventions such as patents. Contrarily, an enterprise having a small patent stock numerical value has few effectively surviving patents and short remaining period, and has small, exclusive technical strength based on inventions.
Further, the present invention calculates the patent stock index based on the patent applications in a predetermined technical field filed by a specified enterprise.

Therefore, it is possible to compare the patent stock index among competitors per technical field. Thereby, it is possible to grasp the exclusivity of technical strength of inventions per technical field, and use this as information for deciding whether it would be more effective for one's company to participate in a new technical field, or to acquire licenses through assignment or negotiation of patent rights from other companies.

Further, the patent stock index calculation means of the present invention calculate a patent stock index by counting said calculated remaining period for all registration gazettes for patents surviving up to the predetermined time, and dividing the same by the average number of days of one year or one month.

Therefore, the user is able to recognize the patent stock index in units of years or months and instantaneously understand the same, and it is possible to display this to the user in an easy-to-view manner. For example, if the patent stock index per patent right is 3652.4 days, this is notified to the user as 10 years or 120 months.

Further, the present invention comprises:

gazette acquisition means for acquiring registration gazettes for patents surviving up to a predetermined time among the patent applications filed by a specified enterprise within a specified period from a database;

remaining period calculation means for calculating a term expiration date of each of rights of said acquired registration gazettes, and calculating the remaining period by subtracting the predetermined time from said term expiration date;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time; and

output means for outputting said calculated average remaining period of total effective patents to display means, printing means, recording medium, or another telecommunications device via a communication line.

Therefore, it is possible to judge whether or not an enterprise recently filed numerous patent applications. And it is also possible to judge whether or not the monopoly situation of such enterprise or technical field will continue for many years.

Further, according to the present invention, the average remaining period of total effective patents is calculated based on the patent applications per predetermined technical field in a specified enterprise.

Therefore, it is possible to compare the average remaining period of total effective patents among competitors per technical field.

Thereby, it is possible to grasp the exclusivity of technical strength of inventions per technical field, and use this as information for deciding whether it would be more effective for one's company to participate in a new technical field, or to acquire licenses through assignment or negotiation of patent rights from other companies.

Moreover, according to the present invention, patent registration gazettes, publications of examined patent applications, publications of examined utility model applications or utility model registration gazettes are used as the registration gazettes.

Therefore, it is possible to conduct an accurate enterprise evaluation based on broader technical documents.

Further, according to the present invention, the display data generation means acquire the number of extinguished inventions of patents extinguished before the predetermined time among the number of inventions acquired by the number-of-inventions acquisition means; and calculate the total number of effective patents by subtracting the number of extinguished inventions from said acquired number of inventions; and generate display data for associating the total number of effective patents and the patent stock index for display.

Therefore, it is possible to display, in an easy-to-read manner, the correlation of the value of total number of effective patents and the value of patent stock index. For instance, when the value of total number of effective patents is large and the patent term expiration sufficiently remains, it is possible to judge that the exclusive technical strength is great, and the enterprise has strong power based on patent rights.

Contrarily, if the value of total number of effective patents is small and the value of patent stock index is also small, it is possible to judge that the exclusive technical_ strength is small, and the enterprise has weak power based on patent rights.

Moreover, according to the present invention, the display data generation means is able to generate display data for associating the sales volume acquired by the sales volume acquisition means and patent stock index for display.

Therefore, it is possible to indicate that there is a close correlation between the sales volume and patent stock index. Further, it is also possible to indicate the differences in trends among industries.

Thereby; since the differences per industry and per enterprise can be clearly read, it is possible to analyze the research and development strategy and intellectual property strategy of an enterprise, and it is possible to judge the enterprise evaluation more accurately.

According to the enterprise evaluation device and enterprise evaluation program of the present invention, it is possible to quantitatively and qualitatively incorporate the value of intangible assets and evaluate the validity of the enterprise value.

Further, according to the enterprise evaluation device and enterprise evaluation program of the present invention, it is possible to know the trend of the enterprise per technical field or predict the potential of the enterprise when making an investment in a specified enterprise, when jointly developing a product with a specified enterprise, or when wishing to be employed in a specified enterprise.

## Claims

1. An enterprise evaluation device, comprising:

   gazette acquisition means for acquiring registration gazettes based on patent applications filed by a specified enterprise within a specified period from a database;
   number-of-inventions acquisition means for acquiring the number of patents subjected to, before a predetermined time, registration or number of claims of the patents as the number of inventions from said acquired registration gazettes;
   number-of-extinguished-inventions acquisition means for acquiring the number of extinguished inventions of patents extinguished before the predetermined time among said acquired number of inventions;
   total number-of-effective-patents calculation means for calculating the total number of effective patents by subtracting the number of extinguished inventions from said acquired number of inventions;
   total effective patent remaining ratio calculation means for calculating the total effective patent remaining ratio through dividing said calculated total number of effective patents by said number of inventions; and
   output means for outputting said calculated total effective patent remaining ratio to display means, printing means, recording medium, or another telecommunications device via a communication line.

2. An enterprise evaluation device, comprising:

   gazette acquisition means for acquiring registration gazettes based on patent applications filed by a specified enterprise within a specified period from a database;
   number of inventions per applicant acquisition means for acquiring the number of patents subjected to, before a predetermined time, registration or number of claims of the patents as the number of registered inventions from each of said acquired registration gazettes, acquiring the number of applicants described in each of said acquired gazettes, and acquiring the number of registered inventions per unit of applicant through dividing said acquired number of registered inventions by the number of applicants;
   number of registered inventions acquisition means for counting said acquired number of registered inventions per unit of applicant for said all acquired gazettes and acquiring the total number of registered inventions as the number of inventions;
   number-of-extinguished-inventions acquisition means for acquiring the number of extinguished inventions of patents extinguished before the predetermined time among said acquired number of inventions;
   total number-of-effective-patents calculation means for calculating the total number of effective patents by subtracting the number of extinguished inventions from said acquired number of inventions;
   total effective patent remaining ratio calculation means for calculating the total effective patent remaining ratio through dividing said calculated total number of effective patents by said number of inventions; and
   output means for outputting said calculated total effective patent remaining ratio to display means, printing means, recording medium, or another telecommunications device via a communication line.

3. An enterprise evaluation device, comprising:

   gazette acquisition means for acquiring registration gazettes based on patent applications in a predetermined technical field filed within a specified period by a specified enterprise from a database;
   number-of-inventions acquisition means for acquiring the number of patents subjected to, before a predetermined time, registration or number of claims of the patents as the number of inventions from said acquired registration gazettes;
   number-of-extinguished-inventions acquisition means for acquiring the number of extinguished inventions of patents extinguished before the predetermined time among said acquired number of inventions;
   total number-of-effective-patents calculation means for calculating the total number of effective patents by subtracting the number of extinguished inventions from said acquired number of inventions;
   total effective patent remaining ratio calculation means for calculating the total effective patent remaining ratio through dividing said calculated total number of effective patents by said number of inventions; and
output means for outputting said calculated total effective patent remaining ratio to display means, printing means, recording medium, or another telecommunications device via a communication line.

4. An enterprise evaluation device, comprising:

gazette acquisition means for acquiring registration gazettes based on patent applications in a predetermined technical field filed by a specified enterprise within a specified period from a database;
number of inventions per applicant acquisition means for acquiring the number of patents subjected to, before a predetermined time, registration or number of claims of the patents as the number of registered inventions from each of said acquired registration gazettes, acquiring the number of applicants described in each of said acquired gazettes, and acquiring the number of registered inventions per unit of applicant through dividing said acquired number of registered inventions by the number of applicants;
number of registered inventions acquisition means for counting said acquired number of registered inventions per unit of applicant for said all acquired gazettes and acquiring the total number of registered inventions as the number of inventions;
number-of-extinguished-inventions acquisition means for acquiring the number of extinguished inventions of patents extinguished before the predetermined time among said acquired number of inventions;
total number-of-effective-patents calculation means for calculating the total number of effective patents by subtracting the number of extinguished inventions from said acquired number of inventions;
total effective patent remaining ratio calculation means for calculating the total effective patent remaining ratio through dividing said calculated total number of effective patents by said number of inventions; and
output means for outputting said calculated total effective patent remaining ratio to display means, printing means, recording medium, or another telecommunications device via a communication line.

5. An enterprise evaluation device, comprising:

gazette acquisition means for acquiring registration gazettes for patents surviving up to a predetermined time among the patent applications filed by a specified enterprise within a specified period from a database;
remaining period calculation means for calculating a term expiration date of each of rights of said acquired registration gazettes; and calculating the remaining period by subtracting the predetermined time from said term expiration date;
patent stock index calculation means for calculating a patent stock index by counting said calculated remaining period for all registration gazettes for patents surviving up to the predetermined time; and
output means for outputting said calculated patent stock index to display means, printing means, recording medium, or another telecommunications device via a communication line.

6. An enterprise evaluation device, comprising:

gazette acquisition means for acquiring registration gazettes for patents surviving up to a predetermined time among the patent applications filed by a specified enterprise within a specified period from a database;
remaining period per applicant calculation means for calculating a term expiration date of each of rights of said acquired registration gazettes, calculating a remaining period by subtracting the predetermined time from said term expiration date, acquiring the number of applicants described in each of said acquired gazettes, and calculating the remaining period per unit of applicant through dividing said remaining period by the number of applicants;
patent stock index calculation means for calculating a patent stock index by counting said calculated remaining period for all registration gazettes for patents surviving up to the predetermined time; and
output means for outputting said calculated patent stock index to display means, printing means, recording medium, or another telecommunications device via a communication line.

7. An enterprise evaluation device, comprising:

gazette acquisition means for acquiring registration gazettes for patents surviving up to a predetermined time among the patent applications in a predetermined technical field filed by a specified enterprise within a specified period from a database;
remaining period calculation means for calculating a term expiration date of each of rights of said acquired registration gazettes, and calculating the remaining period by subtracting the predetermined time from said term expiration date;
patent stock index calculation means for calculating a patent stock index by counting said calculated remaining period for all registration gazettes for patents surviving up to the predetermined time; and
output means for outputting said calculated patent stock index to display means, printing means, recording medium, or another telecommunications device via a communication line.

8. An enterprise evaluation device, comprising:

gazette acquisition means for acquiring registration gazettes for patents surviving up to a predetermined time among the patent applications in a predetermined technical, field filed by a specified enterprise within a specified period from a database;
remaining period per applicant calculation means for calculating a term expiration date of each of rights of said acquired registration gazettes, calculating a remaining period by subtracting the predetermined time from said term expiration date, acquiring the number of applicants described in each of said acquired gazettes, and calculating the remaining period per unit of applicant through dividing said remaining period by the number of applicants;
patent stock index calculation means for calculating a patent stock index by counting said calculated remaining period for all registration gazettes for patents surviving up to the predetermined time; and
output means for outputting said calculated patent stock index to display means, printing means, recording medium, or another telecommunications device via a communication line.

9. An enterprise evaluation device, comprising:

gazette acquisition means for acquiring registration gazettes for patents surviving up to a predetermined time among the patent applications filed by a specified enterprise within a specified period from a database;
remaining period calculation means for calculating a term expiration date of each of rights of said acquired registration gazettes, and calculating the remaining period by subtracting the predetermined time from said term expiration date;
patent stock index calculation means for calculating a patent stock index by counting said calculated remaining period for all registration gazettes for patents surviving up to the predetermined time, and dividing the same by the average number of days of one year or one month; and
output means for outputting said calculated patent stock index to display means, printing means, recording medium, or another telecommunications device via a communication line.

10. An enterprise evaluation device, comprising:

gazette acquisition means for acquiring registration gazettes for patents surviving up to a predetermined time among the patent applications filed by a specified enterprise within a specified period from a database;
remaining period per applicant calculation means for calculating a term expiration date of each of rights of said acquired registration gazettes, calculating a remaining period by subtracting the predetermined time from said term expiration date, acquiring the number of applicants described in each of said acquired gazettes, and calculating the remaining period per unit of applicant through dividing said remaining period by the number of applicants;
patent stock index calculation means for calculating a patent stock index by counting said calculated remaining period for all registration gazettes for patents surviving up to the predetermined time and dividing the same by the average number of days of one year or one month; and
output means for outputting said calculated patent stock index to display means, printing means, recording medium, or another telecommunications device via a communication line.

11. An enterprise evaluation device, comprising:

gazette acquisition means for acquiring registration gazettes for patents surviving up to a predetermined time among the patent applications in a predetermined technical field filed by a specified enterprise within a specified period from a database;
remaining period calculation means for calculating a term expiration date of each of rights of said acquired registration gazettes, and calculating the remaining period by subtracting the predetermined time from said term expiration date;
patent stock index calculation means for calculating a patent stock index by counting said calculated remaining period for all registration gazettes for patents surviving up to the predetermined time and dividing the same by the average number of days of one year or one month; and

output-means for outputting said calculated patent stock index to display means, printing means, recording medium, or another telecommunications device via a communication line.

12. An enterprise evaluation device, comprising:

gazette acquisition means for acquiring registration gazettes for patents surviving up to a predetermined time among the patent applications in a predetermined technical field filed by a specified enterprise within a specified period from a database;

remaining period per applicant calculation means for calculating a term expiration date of each of rights of said acquired registration gazettes, calculating a remaining period by subtracting the predetermined time from said term expiration date, acquiring the number of applicants described in each of said acquired gazettes, and calculating the remaining period per unit of applicant through dividing said remaining period by the number of applicants;

patent stock index calculation means for calculating a patent stock index by counting said calculated remaining period for all registration gazettes for patents surviving up to the predetermined time and dividing the same by the average number of days of one year or one month; and

output means for outputting said calculated patent stock index to display means, printing means, recording medium, or another telecommunications device via a communication line.

13. An enterprise evaluation device, comprising:

gazette acquisition means for acquiring registration gazettes for patents surviving up to a predetermined time among the patent applications filed by a specified enterprise within a specified period from a database;

remaining period calculation means for calculating a term expiration date of each of rights of said acquired registration gazettes, and calculating the remaining period by subtracting the predetermined time from said term expiration date;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time; and

output means for outputting said calculated average remaining period of total effective patents to display means, printing means, recording medium, or another telecommunications device via a communication line.

14. An enterprise evaluation device, comprising:

gazette acquisition means for acquiring registration gazettes for patents surviving up to a predetermined time among the patent applications filed by a specified enterprise within a specified period from a database;

remaining period per applicant calculation means for calculating a term expiration date of each of rights of said acquired registration gazettes, calculating a remaining period by subtracting the predetermined time from said term expiration date, acquiring the number of applicants described in each of said acquired gazettes, and calculating the remaining period per unit of applicant through dividing said remaining period by the number of applicants;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time; and

output means for outputting said calculated average remaining period of total effective patents to display means, printing means, recording medium, or another telecommunications device via a communication line.

15. An enterprise evaluation device, comprising:

gazette acquisition means for acquiring registration gazettes for patents surviving up to a predetermined time among the patent applications in a predetermined technical field filed by a specified enterprise within a specified period from a database;

remaining period calculation means for calculating a term expiration date of each of rights of said acquired registration gazettes, and calculating the remaining period by subtracting the predetermined time from said term expiration date;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time; and

output means for outputting said calculated average remaining period of total effective patents to display means, printing means, recording medium, or another telecommunications device via a communication line.

16. An enterprise evaluation device, comprising:

gazette acquisition means for acquiring registration gazettes for patents surviving up to a predetermined time among the patent applications in a predetermined technical field filed by a specified enterprise within a specified period from a database;

remaining period per applicant calculation means for calculating a term expiration date of each of rights of said acquired registration gazettes, calculating a remaining period by subtracting the predetermined time from said term expiration date, acquiring.the number of applicants described in each of said acquired gazettes, and calculating the remaining period per unit of applicant through dividing said remaining period by the number of applicants;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time; and

output means for outputting said calculated average remaining period of total effective patents to display means, printing means, recording medium, or another telecominunications device via a communication line.

17. An enterprise evaluation device, comprising:

gazette acquisition means for acquiring registration gazettes for patents surviving up to a predetermined time among the patent applications filed by a specified enterprise within a specified period from a database;

remaining period calculation means for calculating a term expiration date of each of rights of said acquired registration gazettes, and calculating the remaining period by subtracting the predetermined time from said term expiration date;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time and the average number of days of one year or one month; and

output means for outputting said calculated average remaining period of total effective patents to display means, printing means, recording medium, or another telecommunications device via a communication line.

18. An enterprise evaluation device, comprising:

gazette acquisition means for acquiring registration gazettes for patents surviving up to a predetermined time among the patent applications filed by a specified enterprise within a specified period from a database;

remaining period per applicant calculation means for calculating a term expiration date of each of rights of said acquired registration gazettes, calculating a remaining period by subtracting the predetermined time from said term expiration date, acquiring the number of applicants described in each of said acquired gazettes, and calculating the remaining period per unit of applicant through dividing said remaining period by the number of applicants;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time and the average number of days of one year or one month; and

output means for outputting said calculated average remaining period of total effective patents to display means, printing means, recording medium, or another telecommunications device via a communication line.

**19.** An enterprise evaluation device, comprising:

gazette acquisition means for acquiring registration gazettes for patents surviving up to a predetermined time among the patent applications in a predetermined technical field filed by a specified enterprise within a specified period from a database;

remaining period calculation means for calculating a term expiration date of each of rights of said acquired registration gazettes, and calculating the remaining period by subtracting the predetermined time from said term expiration date;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time and the average number of days of one year or one month; and output means for outputting said calculated average remaining period of total effective patents to display means, printing means, recording medium, or another telecommunications device via a communication line.

**20.** An enterprise evaluation device, comprising:

gazette acquisition means for acquiring registration gazettes for patents surviving up to a predetermined time among the patent applications in a predetermined technical field filed by a specified enterprise within a specified period from a database;

remaining period per applicant calculation means for calculating a term expiration date of each of rights of said acquired registration gazettes, calculating a remaining period by subtracting the predetermined time from said term expiration date, acquiring the number of applicants described in each of said acquired gazettes, and calculating the remaining period per unit of applicant through dividing said remaining period by the number of applicants;

patent stock index calculation means for calculating a patent stock index by counting said calculated remaining period for all registration gazettes for patents surviving up to the predetermined time;

average remaining period of total effective patents calculation means for calculating the average remaining period of total effective patents through dividing said patent stock index by the number of registration gazettes for patents surviving up to said predetermined time and the average number of days of one year or one month; and output means for outputting said calculated average remaining period of total effective patents to display means, printing means, recording medium, or another telecommunications device via a communication line.

**21.** The enterprise evaluation device according to any one of claims 1 to 20,
wherein said registration gazettes are gazettes including publications of patent registrations, publications of examined patent applications, publications of examined utility model applications or publications of utility model registrations; and
wherein, when the registered gazettes are utility model gazettes, said patent application refers to a utility model application, and the patent subjected to registration refers to a utility model subjected to registration.

**22.** An enterprise evaluation device, comprising:

gazette acquisition means for acquiring registration gazettes based on patent applications filed by a specified enterprise within a specified period from a database;

number-of-inventions acquisition means for acquiring the number of patents subjected to, before a predetermined time, registration or number of claims of the patents as the number of inventions from said acquired registration gazettes;

number-of-extinguished-inventions acquisition means for acquiring the number of extinguished inventions of patents extinguished before the predetermined time among said acquired number of inventions;

total number-of-effective-patents calculation means for calculating the total number of effective patents by subtracting the number of extinguished inventions from said acquired number of inventions;

display data generation means for generating display data for associating said total number of effective patents and the patent stock index according to any one of claims 5 to 12 for display; and

output means for outputting said display data to display means, printing means, recording medium, or another telecommunications device via a communication line.

23. An enterprise evaluation device, comprising:

sales volume acquisition means for acquiring a sales volume of a specified enterprise during a predetermined time from a management-finance database recording management-finance information of an enterprise;
display data generation means for generating display data for associating said sales volume and the patent stock index according to any one of claims 5 to 12 for display; and
output means for outputting said display data to display means, printing means, recording medium, or another telecommunications device via a communication line.

24. An enterprise evaluation program to be executed by information processing means of an enterprise evaluation device comprising gazette acquisition means for acquiring registration gazettes from a database, number-of-inventions acquisition means for acquiring the number of inventions from registration gazettes, number-of-extinguished-inventions acquisition means for acquiring the number of extinguished inventions among the number of inventions, total number-of-effective-patents calculation means for calculating the total number of effective patents, total effective patent remaining ratio calculation means for calculating the total effective patent remaining ratio, output means for outputting the total effective patent remaining ratio to display means or the like, and information processing means capable of controlling said gazette acquisition means, number-of-inventions acquisition means, number-of-extinguished-inventions acquisition means, total number-of-effective-patents calculation means, total effective patent remaining ratio calculation means and output means,
wherein said information processing means achieves:

a function for causing said gazette acquisition means to acquire registration gazettes based on patent applications filed by a specified enterprise within a specified period from a database;
a function for causing said number of inventions acquisition means to acquire the number of patents subjected to, before a predetermined time, registration or number of claims of the patents as the number of inventions from said acquired registration gazettes,
a function for causing said number-of-extinguished-inventions acquisition means to acquire the number of extinguished inventions of patents extinguished before the predetermined time among said acquired number of inventions;
a function for causing said total number-of-effective-patents calculation means to calculate the total number of effective patents by subtracting the number of extinguished inventions from said acquired number of inventions;
a function for causing said total effective patent remaining ratio calculation means to calculate the total effective patent remaining ratio through dividing said calculated total number of effective patents by said number of inventions; and
a function for causing said output means to output said calculated total effective patent remaining ratio to display means, printing means, recording medium, or another telecommunications device via a communication line.

25. An enterprise evaluation program to be executed by information processing means of an enterprise evaluation device comprising gazette acquisition means for acquiring registration gazettes from a database, number of inventions per applicant acquisition means for acquiring the number of registered inventions per unit of applicant, number of registered inventions acquisition means for acquiring the number of inventions, number-of-extinguished-inventions acquisition means for acquiring the number of extinguished inventions among the number of inventions, total number-of-effective-patents calculation means for calculating the total number of effective patents, total effective patent remaining ratio calculation means for calculating the total effective patent remaining ratio, output means for outputting the total effective patent remaining ratio to display means or the like, and information processing means capable of controlling said gazette acquisition means, number of inventions per applicant acquisition means, number of registered inventions acquisition means, number-of-extinguished-inventions acquisition means, total number-of-effective-patents calculation means, total effective patent remaining ratio calculation means and output means,
wherein said information processing means achieves:

a function for causing said gazette acquisition means to acquire registration gazettes based on patent applications filed by a specified enterprise within a specified period from a database;
a function for causing said number of inventions per applicant acquisition means to acquire the number of patents subjected to, before a predetermined time, registration or number of claims of the patents as the number of registered inventions from each of said acquired registration gazettes, acquire the number of applicants described in each of said acquired gazettes, and acquire the number of registered inventions per unit of applicant through dividing said acquired number of registered inventions by the number of applicants;

a function for causing said number of registered inventions acquisition means to count said acquired number of registered inventions per unit of applicant for said all acquired gazettes and acquiring the total number of registered inventions as the number of inventions;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said total effective patent remaining ratio calculation means to calculate the total effective patent remaining ratio through dividing said calculated total number of effective patents by said number of inventions; and

a function for causing said output means to output said calculated total effective patent remaining ratio to display means, printing means, recording medium, or another telecommunications device via a communication line.

26. An enterprise evaluation program to be executed by information processing means of an enterprise evaluation device comprising gazette acquisition means for acquiring registration gazettes from a database, number-of-inventions acquisition means for acquiring the number of inventions from registration gazettes, number-of-extinguished-inventions acquisition means for acquiring the number of extinguished inventions among the number of inventions, total number-of-effective-patents calculation means for calculating the total number of effective patents, total effective patent remaining ratio calculation means for calculating the total effective patent remaining ratio, output means for outputting the total effective patent remaining ratio to display means or the like, and information processing means capable of controlling said gazette acquisition means, number-of-inventions acquisition means, number-of-extinguished-inventions acquisition means, total number-of-effective-patents calculation means, total effective patent remaining ratio calculation means and output means,
wherein said information processing means achieves:

a function for causing said gazette acquisition means to acquire registration gazettes based on patent applications in a predetermined technical field filed within a specified period by a specified enterprise from a database;

a function for causing said number-of-inventions acquisition means to acquire the number of patents subjected to, before a predetermined time, registration or number of claims of the patents as the number of inventions from said acquired registration gazettes;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said total effective patent remaining ratio calculation means to calculate the total effective patent remaining ratio through dividing said calculated total number of effective patents by said number of inventions; and

a function for causing said output means to output said calculated total effective patent remaining ratio to display means, printing means, recording medium, or another telecommunications device via a communication line.

27. An enterprise evaluation program to be executed by information processing means of an enterprise evaluation device comprising gazette acquisition means for acquiring registration gazettes from a database, number of inventions per applicant acquisition means for acquiring the number of registered inventions per unit of applicant, number of registered inventions acquisition means for acquiring the number of inventions, number-of-extinguished-inventions acquisition means for acquiring the number of extinguished inventions among the number of inventions, total number-of-effective-patents calculation means for calculating the total number of effective patents, total effective patent remaining ratio calculation means for calculating the total effective patent remaining ratio, output means for outputting the total effective patent remaining ratio to display means or the like, and information processing means capable of controlling said gazette acquisition means, number of inventions per applicant acquisition means, number of registered inventions acquisition means, number-of-extinguished-inventions acquisition means, total number-of-effective-patents calculation means, total effective patent remaining ratio calculation means and output means,
wherein said information processing means achieves:

a function for causing said gazette acquisition means to acquire registration gazettes based on patent applications in a predetermined technical field filed by a specified enterprise within a specified period from a database;

a function for causing said number of inventions per applicant acquisition means to acquire the number of patents subjected to, before a predetermined time, registration or number of claims of the patents as the number of registered inventions from each of said acquired registration gazettes, acquire the number of applicants described in each of said acquired gazettes, and acquire the number of registered inventions per unit of applicant through dividing said acquired number of registered inventions by the number of applicants;

a function for causing said number of registered inventions acquisition means to count said acquired number of registered inventions per unit of applicant for said all acquired gazettes and acquire the total number of registered inventions as the number of inventions;

a function for causing said number-of-extinguished-inventions acquisition means to acquire the number of extinguished inventions of patents extinguished before the predetermined time among said acquired number of inventions;

a function for causing said total number-of-effective-patents calculation means to calculate the total number of effective patents by subtracting the number of extinguished inventions from said acquired number of inventions;

a function for causing said total effective patent remaining ratio calculation means to calculate the total effective patent remaining ratio through dividing said calculated total number of effective patents by said number of inventions; and

a function for causing said output means to output said calculated total effective patent remaining ratio to display means, printing means, recording medium, or another telecommunications device via a communication line.

28. An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period calculation means, patent stock index calculation means, average remaining period of total effective patents calculation means and output means,
wherein said information processing means achieves:

a function for causing said gazette acquisition means to acquire registration gazettes for patents surviving up to a predetermined time among the patent applications filed by a specified enterprise within a specified period from a database;

a function for causing said remaining period calculation means to calculate a term expiration date of each of rights of said acquired registration gazettes, and calculate the remainirig period-by subtracting the predetermined time from said term expiration date;

a function for causing said patent stock index calculation means to calculate a patent stock index by counting said calculated remaining period for all registration gazettes for patents surviving up to the predetermined time;

a function for causing said average remaining period of total effective patents calculation means to calculate the average remaining period of total effective patents through dividing said patent stock index by the number of registration gazettes for patents surviving up to said predetermined time; and

a function for causing said output means to output said calculated average remaining period of total effective patents to display means, printing means, recording medium, or another telecommunications device via a communication line.

29. An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period per applicant calculation means, patent stock index calculation means, average remaining period of total effective patents calculation means and output means,
wherein said information processing means achieves:

a function for causing said gazette acquisition means to acquire registration gazettes for patents surviving up to a predetermined time among the patent applications filed by a specified enterprise within a specified period from a database;

a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;

a function for causing said patent stock index calculation means to calculate a patent stock index by counting said calculated remaining period for all.registration gazettes for patents surviving up to the predetermined time;

a function for causing said average remaining period of total effective patents calculation means to calculate the average remaining period of total effective patents through dividing said patent stock index by the number of registration gazettes for patents surviving up to said predetermined time; and

a function for causing said output means to output said calculated average remaining period of total effective patents to display means, printing means, recording medium, or another telecommunications device via a communication line.

30. An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period calculation means, patent stock index calculation means, average remaining period of total effective patents calculation means and output means,
wherein said information processing means achieves:

a function for causing said gazette acquisition means to acquire registration gazettes for patents surviving up to a predetermined time among the patent applications in a predetermined technical field filed by a specified enterprise within a specified period from a database;

a function for causing said remaining period calculation means to calculate a term expiration date of each of rights of said acquired registration gazettes, and calculate the remaining period by subtracting the predetermined time from said term expiration date;

a function for causing said patent stock index calculation means to calculate a patent stock index by counting said calculated remaining period for all registration gazettes for patents surviving up to the predetermined time;

a function for causing said average remaining period of total effective patents calculation means to calculate the average remaining period of total effective patents through dividing said patent stock index by the number of registration gazettes for patents surviving up to said predetermined time; and

a function for causing said output means to output said calculated average remaining period of total effective patents to display means, printing means, recording medium, or another telecommunications device via a communication line.

31. An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period per applicant calculation means, patent stock index calculation means, average remaining period of total effective patents calculation means and output means,
wherein said information processing means achieves:

a function for causing said gazette acquisition means to acquire registration gazettes for patents surviving up to a predetermined time among the patent applications in a predetermined technical field filed by a specified enterprise within a specified period from a database;

a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;

a function for causing said patent stock index calculation means to calculate a patent stock index by counting said calculated remaining period for all registration gazettes for patents surviving up to the predetermined time;

a function for causing said average remaining period of total effective patents calculation means to calculate the average remaining period of total effective patents through dividing said patent stock index by the number of registration gazettes for patents surviving up to said predetermined time; and

a function for causing said output means to output said calculated average remaining period of total effective patents to display means, printing means, recording medium, or another telecommunications device via a communication line.

32. An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period calculation means, patent stock index calculation means, average remaining period of total effective patents calculation means and output means,
wherein said information processing means achieves:

a function for causing said gazette acquisition means to acquire registration gazettes for patents surviving up to a predetermined time among the patent applications filed by a specified enterprise within a specified period from a database;

a function for causing said remaining period calculation means to calculate a term expiration date of each of rights of said acquired registration gazettes, and calculate the remaining period by subtracting the predetermined time from said term expiration date;

a function for causing said patent stock index calculation means to calculate a patent stock index by counting said calculated remaining period for all registration gazettes for patents surviving up to the predetermined time;

a function for causing said average remaining period of total effective patents calculation means to calculate the average remaining period of total effective patents through dividing said patent stock index by the number of registration gazettes for patents surviving up to said predetermined time and the average number of days of one year or one month; and

a function for causing said output means to output said calculated average remaining period of total effective patents to display means, printing means, recording medium, or another telecommunications device via a communication line.

33. An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period per applicant calculation means, patent stock index calculation means, average remaining period of total effective patents calculation means and output means,
wherein said information processing means achieves:

a function for causing said gazette acquisition means to acquire registration gazettes for patents surviving up to a predetermined time among the patent applications filed by a specified enterprise within a specified period from a database;

a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;

a function for causing said patent stock index calculation means to calculate a patent stock index by counting said calculated remaining period for all registration gazettes for patents surviving up to the predetermined time;

a function for causing said average remaining period of total effective patents calculation means to calculate the average remaining period of total effective patents through dividing said patent stock index by the number of registration gazettes for patents surviving up to said predetermined time and the average number of days of one year or one month; and

a function for causing said output means to output said calculated average remaining period of total effective patents to display means, printing means, recording medium, or another telecommunications device via a communication line.

34. An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period calculation means, patent stock index calculation means, average remaining period of total effective patents calculation means and output means, wherein said information processing means achieves:

a function for causing said gazette acquisition means to acquire registration gazettes for patents surviving up to a predetermined time among the patent applications in a predetermined technical field filed by a specified enterprise within a specified period from a database;
a function for causing said remaining period calculation means to calculate a term expiration date of each of rights of said acquired registration gazettes, and calculate the remaining period by subtracting the predetermined time from said term expiration date;
a function for causing said patent stock index calculation means to calculate a patent stock index by counting said calculated remaining period for all registration gazettes for patents surviving up to the predetermined time;
a function for causing said average remaining period of total effective patents calculation means to calculate the average remaining period of total effective patents through dividing said patent stock index by the number of registration gazettes for patents surviving up to said predetermined time and the average number of days of one year or one month; and
a function for causing said output means to output said calculated average remaining period of total effective patents to display means, printing means, recording medium, or another telecommunications device via a communication line.

35. An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, average remaining period of total effective patents calculation means for calculating the average remaining period of total effective patents, output means for outputting the average remaining period of total effective patents to display means or the like, and information processing means capable of controlling said gazette acquisition means, remaining period per applicant calculation means, patent stock index calculation means, average remaining period of total effective patents calculation means and output means, wherein said information processing means achieves:

a function for causing said gazette acquisition means to acquire registration gazettes for patents surviving up to a predetermined time among the patent applications in a predetermined technical field filed by a specified enterprise within a specified period from a database;
a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;
a function for causing said patent stock index calculation means to calculate a patent stock index by counting said calculated remaining period for all registration gazettes for patents surviving up to the predetermined time;
a function for causing said average remaining period of total effective patents calculation means to calculate the average remaining period of total effective patents through dividing said patent stock index by the number of registration gazettes for patents surviving up to said predetermined time and the average number of days of one year or one month; and
a function for causing said output means to output said calculated average remaining period of total effective patents to display means, printing means, recording medium, or another telecommunications device via a communication line.

36. An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, output means for outputting the patent stock index to display means or the like, and information processing means capable of controlling said gazette acquisition means, remaining period calculation means, patent stock index calculation means and output means,
wherein said information processing means achieves:

a function for causing said gazette acquisition means to acquire registration gazettes for patents surviving up to a predetermined time among the patent applications filed by a specified enterprise within a specified period from a database;
a function for causing said remaining period calculation means to calculate a term expiration date of each of rights of said acquired registration gazettes, and calculate the remaining period by subtracting the predetermined time from said term expiration date;
a function for causing said patent stock index calculation means to calculate a patent stock index by counting said calculated remaining period for all registration gazettes for patents surviving up to the predetermined time; and
a function for causing said output means to output said calculated patent stock index to display means, printing means, recording medium, or another telecommunications device via a communication line.

37. An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, output means for outputting the patent stock index to display means or the like, and information processing means capable of controlling said gazette acquisition means, remaining period per applicant calculation means, patent stock index calculation means and output means,
wherein said information processing means achieves:

a function for causing said gazette acquisition means to acquire registration gazettes for patents surviving up to a predetermined time among the patent applications filed by a specified enterprise within a specified period from a database;
a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;
a function for causing said patent stock index calculation means to calculate a patent stock index by counting said calculated remaining period for all registration gazettes for patents surviving up to the predetermined time; and
a function for causing said output means to output said calculated patent stock index to display means, printing means, recording medium, or another telecommunications device via a communication line.

38. An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, output means for outputting the patent stock index to display means or the like, and information processing means capable of controlling said gazette acquisition means, remaining period calculation means, patent stock index calculation means and output means,
wherein said information processing means achieves:

a function for causing said gazette acquisition means to acquire registration gazettes for patents surviving up to a predetermined time among the patent applications in a predetermined technical field filed by a specified enterprise within a specified period from a database;
a function for causing said remaining period calculation means to calculate a term expiration date of each of rights of said acquired registration gazettes, and calculate the remaining period by subtracting the predetermined time from said term expiration date;
a function for causing said patent stock index calculation means to calculate a patent stock index by counting said calculated remaining period for all registration gazettes for patents surviving up to the predetermined time; and

a function for causing said output means to output said calculated patent stock index to display means, printing means, recording medium, or another telecommunications device via a communication line.

**39.** An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, output means for outputting the patent stock index to display means or the like, and information processing means capable of controlling said gazette acquisition means, remaining period per applicant calculation means, patent stock index calculation means and output means, wherein said information processing means achieves:

a function for causing said gazette acquisition means to acquire registration gazettes for patents surviving up to a predetermined time among the patent applications in a predetermined technical field filed by a specified enterprise within a specified period from a database;

a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;

a function for causing said patent stock index calculation means to calculate a patent stock index by counting said calculated remaining period for all registration gazettes for patents surviving up to the predetermined time; and

a function for causing said output means to output said calculated patent stock index to display means, printing means, recording medium, or another telecommunications device via a communication line.

**40.** An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, output means for outputting the patent stock index to display means or the like, and information processing means capable of controlling said gazette acquisition means, remaining period calculation means, patent stock index calculation means and output means, wherein said information processing means achieves:

a function for causing said gazette acquisition means to acquire registration gazettes for patents surviving up to a predetermined time among the patent applications filed by a specified enterprise within a specified period from a database;

a function for causing said remaining period calculation means to calculate a term expiration date of each of rights of said acquired registration gazettes, and calculate the remaining period by subtracting the predetermined time from said term expiration date;

a function for causing said patent stock index calculation means to calculate a patent stock index by counting said calculated remaining period for all registration gazettes for patents surviving up to the predetermined time, and dividing the same by the average number of days of one year or one month; and

a function for causing said output means to output said calculated patent stock index to display means, printing means, recording medium, or another telecommunications device via a communication line.

**41.** An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, output means for outputting the patent stock index to display means or the like, and information processing means capable of controlling said gazette acquisition means, remaining period per applicant calculation means, patent stock index calculation means and output means, wherein said information processing means achieves:

a function for causing said gazette acquisition means to acquire registration gazettes for patents surviving up to a predetermined time among the patent applications filed by a specified enterprise within a specified period from a database;

a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;

a function for causing said patent stock index calculation means to calculate a patent stock index by counting said calculated remaining period for all registration gazettes for patents surviving up to the predetermined time and dividing the same by the average number of days of one year or one month; and

a function for causing said output means to output said calculated patent stock index to display means, printing means, recording medium, or another telecommunications device via a communication line.

42. An enterprise evaluation program to be executed by information processing means of an enterprise evaluation device comprising gazette acquisition means for acquiring registration gazettes from a database, remaining period calculation means for calculating the remaining period, patent stock index calculation means for calculating the patent stock index, output means for outputting the patent stock index to display means or the like, and information processing means capable of controlling said gazette acquisition means, remaining period calculation means, patent stock index calculation means and output means,

wherein said information processing means achieves:

a function for causing said gazette acquisition means to acquire registration gazettes for patents surviving up to a predetermined time among the patent applications in a predetermined technical field filed by a specified enterprise within a specified period from a database;

a function for causing said remaining period calculation means to calculate a term expiration date of each of rights of said acquired registration gazettes, and calculate the remaining period by subtracting the predetermined time from said term expiration date;

a function for causing said patent stock index calculation means to calculate a patent stock index by counting said calculated remaining period for all registration gazettes for patents surviving up to the predetermined time and dividing the same by the average number of days of one year or one month; and

a function for causing said output means to output said calculated patent stock index to display means, printing means, recording medium, or another telecommunications device via a communication line.

43. An enterprise evaluation program to be executed by information processing means of an enterprise evaluation device comprising gazette acquisition means for acquiring registration gazettes from a database, remaining period per applicant calculation means for calculating the remaining period per unit of applicant, patent stock index calculation means for calculating the patent stock index, output means for outputting the patent stock index to display means or the like, and information processing means capable of controlling said gazette acquisition means, remaining period per applicant calculation means, patent stock index calculation means and output means,

wherein said information processing means achieves:

a function for causing said gazette acquisition means to acquire registration gazettes for patents surviving up to a predetermined time among the patent applications in a predetermined technical field filed by a specified enterprise within a specified period from a database;

a function for causing said remaining period per applicant calculation means to calculate a term expiration date of each of rights of said acquired registration gazettes, calculate a remaining period by subtracting the predetermined time from said term expiration date, acquire the number of applicants described in each of said acquired gazettes, and calculate the remaining period per unit of applicant through dividing said remaining period by the number of applicants;

a function for causing said patent stock index calculation means to calculate a patent stock index by counting said calculated remaining period for all registration gazettes for patents surviving up to the predetermined time and dividing the same by the average number of days of one year or one month; and

a function for causing said output means to output said calculated patent stock index to display means, printing means, recording medium, or another telecommunications device via a communication line.

44. The enterprise evaluation program according to any one of claims 24 to 43,

wherein said registration gazettes are gazettes including publications of patent registrations, publications of examined patent applications, publications of examined utility model applications or publications of utility model registrations; and

wherein, when the registered gazettes are utility model gazettes, said patent application refers to a utility model application, and the patent subjected to registration refers to a utility model subjected to registration.

**45.** An enterprise evaluation program to be executed by information processing means of an enterprise evaluation device comprising gazette acquisition means for acquiring registration gazettes from a database, number-of-inventions acquisition means for acquiring the number of inventions from registration gazettes, number-of-extinguished-inventions acquisition means for acquiring the number of extinguished inventions among the number of inventions, total number-of-effective-patents calculation means for calculating the total number of effective patents, display data generation means for generating display data, output means for outputting the display data to display means or the like, and information processing means capable of acquiring the patent stock index and controlling said gazette acquisition means, number-of-inventions acquisition means, number-of-extinguished-inventions acquisition means, total number-of-effective-patents calculation means, display data generation means and output means, wherein said information processing means achieves:

a function for acquiring the patent stock index according to any one of claims 36 to 43;
a function for causing said gazette acquisition means to acquire registration gazettes based on patent applications filed by a specified enterprise within a specified period from a database;
a function for causing said number-of-inventions acquisition means to acquire the number of patents subjected to, before a predetermined time, registration or number of claims of the patents as the number of inventions from said acquired registration gazettes;
a function for causing said number-of-extinguished-inventions acquisition means to acquire the number of extinguished inventions of patents extinguished before the predetermined time among said acquired number of inventions;
a function for causing said total number-of-effective-patents calculation means to calculate the total number of effective patents by subtracting the number of extinguished inventions from said acquired number of inventions;
a function for causing said display data generation means to generate display data for associating said total number of effective patents and the patent stock index for display; and
a function for causing said output means to output said display data to display means, printing means, recording medium, or another telecommunications device via a communication line.

**46.** An enterprise evaluation program to be executed by information processing means of an enterprise evaluation device comprising management-finance information acquisition means for acquiring a sales volume from a management-finance database, display data generation means for generating display data, output means for outputting the display data to display means or the like, and information processing means capable of acquiring the patent stock index and controlling said management-finance information acquisition means, display data generation means and output means, wherein said information processing means achieves:

a function for acquiring the patent stock index according to any one of claims 36 to 43;
a function for causing said management-finance information acquisition means to acquire a sales volume of a specified enterprise during a predetermined time from a management-finance database recording management-finance information of an enterprise;
a function for causing said display data generation means to generate display data for associating said sales volume and the patent stock index for display; and
a function for causing said output means to output said display data to display means, printing means, recording medium, or another telecommunications device via a communication line.

FIG. 1

DATABASE

(a) MANAGEMENT-
    FINANCE INFORMATION
(b) PATENT INFORMATION
(c) MARKET VALUE
    INFORMATION
(d) TECHNICAL
    DOCUMENTS

COMMUNICATION
NETWORK

FIG. 2

PRINTER

TRANSMISSION/
RECEPTION
MEANS

INPUT MEANS
(LCD DISPLAY)

DISPLAY MEANS
(CRT, etc)

INPUT I/F

DISPLAY I/F

PRINTER I/F

CPU
(INFORMATION
PROCESSING
MEANS)

MEMORY

RECORDING
MEANS I/F

RECORDING
MEDIUM I/F

CALENDAR
CLOCK

HDD
(RECORDING
MEANS)

RECORDING
MEDIUM
MOUNTING UNIT

RECORDING
MEDIUM

## FIG. 3

### (a) MANAGEMENT-FINANCE INFORMATION

| (A) Information on Size of Company | (B) Financial Information of Company | (C) Combined Information of Company |
|---|---|---|
| Number of employees | Sales volume | Sales volume per employee |
| Number of officers | Sales profit | R&D cost per employee |
| Capital | Operating profit | Sales profit per employee |
| Number of plants/offices | Gross operating profit | Operating profit per employee |
| Ground floor area | Sales profit ratio | Gross operating profit per employee |
| Total floor area | Operating profit ratio | |
| Ownership ratio of premises | Gross operating profit ratio | |
| Ownership ratio of building | Total market value to total assets ratio | |
| Number of employees (consolidated basis) | Total market value to stockholders' equity ratio | |
| Number of officers (consolidated basis) | Total market value to sales volume ratio | |
| Capital (consolidated basis) | Total market value to gross operating profit ratio | |
| Number of plants/offices (consolidated basis) | Total market value to operating profit ratio | |
| Ground floor area (consolidated basis) | Gross operating profit to total assets ratio | |
| Total floor area (consolidated basis) | Gross operating profit to stockholders' equity ratio | |
| Ownership ratio of premises (consolidated basis) | Operating profit to total assets ratio | |
| Ownership ratio of building (consolidated basis) | Operating profit to Stockholders' equity ratio | |
| | Stockholders' equity ratio | |
| | Balance of total market value and stockholders' equity | |
| | R&D cost | |
| | R&D cost to sales volume ratio | |
| | R&D cost to operating profit ratio | |
| | R&D cost to gross operating profit ratio | |

FIG. 4A

(b) PATENT INFORMATION

| (A) Application Related Matters | |
|---|---|
| Filing date | Number of filings |
| Application number | Number of request for examination |
| Title of the invention | Number of filings based on IPC |
| Inventors | Number of filings based on keywords |
| Applicants | Number of claims filed |
| Scope of claims | Years spent on examination requests |
| Abstract | Number of inventors |
| IPC | Number of applicants (number of joint applications) |
| FI | Number of domestic priority-claiming applications |
| F term | Number of domestic priority bases claimed in applications |
| Agents | Number of priority bases from foreign countries |
| Publication date | Number of applications in which an exception to loss of novelty is requested |
| Publication number | Number of applications in which examination is requested before laid-open |
| Existence of request for examination | Number of divisional applications |
| Date of request for examination | Number of withdrawn/abandoned applications |
| Priority date | Number of converted applications |
| Priority number | Number of expedited examinations |
| Date of publication of translations of PCT international application | Number of filings (in each country) |
| Number for publication of translations of PCT international application | Number of inventors in applications (in each country) |
| Date of domestic re-publication of PCT international application | Number of applicants in applications (in each country) |
| Number for domestic re-publication of PCT international application | Number of priority-claiming applications (in each country) |
| International filing date | Number of priority bases claimed in applications (in each country) |
| International application number | Number of divisional applications (in each country) |
| International publication date | |
| International publication number | |
| Designated countries | |

FIG. 4B

(b) PATENT INFORMATION

| (B) Registration Related Matters | |
|---|---|
| Registration date | Number of registrations |
| Issue date of registration | Number of claims registered |
| Registration number | Number of expired patents after registration |
| Scheduled day of expiration of right | Years spent from application to registration |
| Date of publication of examined application | Patent registration rate |
| Publication number of examined application | Patent allowance rate |
| Annual maintenance fee payment status | Years spent from request for examination to registration |
| Number of final decisions for rejection | Number of applications in which preferential examination is conducted |
| Date of final decision for rejection | Number of rejections issued |
| Number of claims decided to be finally rejected | Number of amendments filed |
| Number of appeals against final decision for rejection | Number of amendments filed (for formalities) |
| number of abandoned/withdrawn applications after request for examination | Number of written oppositions filed |
| Number of abandoned/withdrawn claims after request for examination | Number of appeals and trials |
| Number of invalidation trials | Number of registrations for creating patent right |
| Appeal/trial number | Number of registrations for extending term of patent right |
| Date of decision to appeal/trial | Number of transferred patents |
| Number of claims demanded for invalidation trial | Number of registrations (in each country) |
| Number of appeals to dismissal of amendment or trials for correction | Years required for registration (in each country) |
| Number of oppositions | Years spent on examination (in each country) |
| Number of claims demanded for opposition | Number of rejections issued (in each country) |
| Inventors of registered patent | Number of amendments filed (in each country) |
| Number of inventors of registered patent | Number of amendments filed (for formalities) (in each country) |
| Applicants of registered patent | Number of oppositions filed (in each country) |
| References cited | Number of applications in which preferential examination is conducted |
| | Number of rejections issued |
| | |

"PATENT QUARTERLY JOURNAL" INDEX LIST OF ENTERPRISE VALUE EVALUATION SYSTEM

A: Business, Profit and Market Value Related Index (1)

| Index Group | Index | Formula |
|---|---|---|
| (A) Investment | Facility Investment Amount | [(Current Term Tangible Fixed Assets - Previous Term Tangible Fixed Assets)] + (Current Term Depreciation Cost) |
| | R&D Cost | Total Amount of R&D Cost |
| | Investment Trend Index | Term-on-Term Ratio of [(Facility Investment Amount) + (R&D Cost)] |
| (B) Management/Finance Analysis | Facility Investment Efficiency | (Value Added Amount)/(Tangible Fixed Assets) |
| | Labor Productivity | (Value Added Amount)/(Number of Employees) |
| | Labor Equipment Ratio | (Tangible Fixed Assets)/(Number of Employees) |
| | Labor Distribution Share | [(Personnel Expense to be Included in Selling Cost and Administrative Expenses) + (Labor Cost to be Included in Manufacturing Cost)]/(Value Added Amount) |
| | Total Factor Productivity | (Value Added Amount Rate of Change) - [(1 - Labor Distribution Share (To Value Added)) × (Depreciation Target Tangible Fixed Assets Rate of Change)] - [(Labor Distribution Share (To Value Added)) × (Number of Employees Rate of Change)] |
| | Cost-to-Sales Ratio | (Cost of Sales)/(Sales Volume) |
| | Cost of Sales-and-Administration Ratio to Sales | (Selling Cost and Administrative Expenses)/(Sales Volume) |
| | Interest Bearing Debt Ratio | (Interest Bearing Debt)/(Total Assets) |
| | Equity to Asset Ratio | (Equity Capital)/(Total Assets) |
| (C) Profit Related Items | Sales Volume | (Sales Volume) |
| | Value Added Amount | (Operating Net Profit) + (Interest Paid and Discount) + (R&D Cost) + (Depreciation Cost) + (Personnel Expense (including board members' remuneration)) + (Welfare Expense) + (Tax and Dues)  (Operating Net Profit) = (Operating Profit) - (Interest Paid and Discount) |
| | Gross Operating Profit (GBP) | (Operating Profit) + (R&D Cost) |
| | Earnings Before Interest, Taxes, Depreciation and Amortization (EBITDA) | (Operating Profit) + (Depreciation Cost) |
| | Operating Profit | (Operating Profit) |
| | Operating Net Profit | (Operating Profit) - (Interest Paid and Discount) |
| | Patent Royalty Income | (Patent Royalty Income (Including Royalty Income of Trademarks and Brands, etc.)) |
| | ROA α | [(Value Added Amount) + (Patent Royalty Income)]/(Total Assets) |
| | ROA β | [(GBP) + (Patent Royalty Income)]/(Total Assets) |
| | ROA γ | [(EBITDA) + (Patent Royalty Income)]/(Total Assets) |
| | ROA δ | [(Operating Profit) + (Patent Royalty Income)]/(Total Assets) |
| | Earnings on Intellectual Assets (EOIA) | [(GBP) + (Patent Royalty Income)] - [(Financial Assets) × (Profit Ratio m)] + [(Tangible Fixed Assets) × (Profit Ratio f)] (Profit Ratio m): Application of Short Term Prime Rate; (Profit Ratio f): Application of Long Term Prime Rate |
| | Return On Intellectual Assets (ROIA) | (Earnings on Intellectual Assets)/(Total Assets) |

FIG. 5

EP 1 688 874 A1

44

FIG. 6

EP 1 688 874 A1

"PATENT QUARTERLY JOURNAL" INDEX LIST OF ENTERPRISE VALUE EVALUATION SYSTEM

A: Business, Profit and Market Value Related Index (2)

| Index Group | Index | Formula |
|---|---|---|
| (D) Excess Profit Analysis | Excess Value Added Amount | Sales Volume × {(Sales Volume Value Added Ratio) - (Industry Average Sales Volume Value Added Ratio)} |
| | Excess GBP | Sales Volume × {(Sales Volume GBP Ratio) - (Industry Average Sales Volume GBP Ratio)} |
| | Excess EBITDA | Sales Volume × {(Sales Volume EBITDA Ratio) - (Industry Average Sales Volume EBITDA Ratio)} |
| | Excess Operating Profit | Sales Volume × {(Operating Profit Ratio (To Sales)) - (Industry Average Operating Profit Ratio (To Sales))} |
| | Excess ROA $\alpha$ | (ROA $\alpha$) - (Industry Average ROA $\alpha$) |
| | Excess ROA $\beta$ | (ROA $\beta$) - (Industry Average ROA $\beta$) |
| | Excess ROA $\gamma$ | (ROA $\gamma$) - (Industry Average ROA $\gamma$) |
| | Excess ROA $\delta$ | (ROA $\delta$) - (Industry Average ROA $\delta$) |
| | Excess Earnings on Intellectual Assets (EXEOIA) | (Net Assets) × {(Ratio of Earnings on Intellectual Assets) - (Industry Average of Ratio of Earnings on Intellectual Assets) |
| (M) Market Evaluation Related Items | MVA | (Value of Stock) - (Shareholders' Equity)    (Value of Stock) = (Total Number of Outstanding Stock) × (Stock Price) |
| | PBR | (Value of Stock)/(Equity Capital) |
| | Expected Intellectual Property Profit | {(Fixed Liabilities) × (Profit Ratio a) + (Value of Stock) × (Profit Ratio p)} - {(Financial Assets) × (Profit Ratio m) + (Tangible Fixed Assets) × (Profit Ratio f)} (Profit Ratio a): (Weighted Average of Long Term Prime Rate and Bond Rate) × (1 - Corporate Tax) (Profit Ratio p): Calculated Based on Capital Asset Pricing Model (CAPM). Yield on Long Term 10-Year Government Bonds, Stock Investment Profit Ratio, $\beta$ Value were used; (Profit Ratio m): Application of Short Term Prime Rate (Profit Ratio f): Application of Long Term Prime Rate |
| (PE) Patent Profitability Related Items | Patent Profitability $\alpha$ | {(GBP) + (Patent Royalty Income)}/(Total Number of Effective Patents) |
| | Patent Profitability $\beta$ | {(Excess Value Added) + (Patent Royalty Income)}/(Total Number of Effective Patents) |
| | Patent Profitability $\gamma$ | {(Excess GBP) + (Patent Royalty Income)}/(Total Number of Effective Patents) |
| | Patent Profitability $\delta$ | (Excess Earnings on Intellectual Assets (EXEOIA))/(Total Number of Effective Patents) |

FIG. 7

EP 1 688 874 A1

"PATENT QUARTERLY JOURNAL" INDEX LIST OF ENTERPRISE VALUE EVALUATION SYSTEM

B: R&D and Patent Related Index (1)

| Index Group | Index | Formula |
|---|---|---|
| (R) R&D Related Items | R&D Cost Ratio $\alpha$ | (R&D Cost)/(Sales Volume) |
| | R&D Cost Ratio $\beta$ | (R&D Cost)/(Value Added Amount) |
| | R&D Cost Ratio $\gamma$ | (R&D Cost)/(GBP) |
| | R&D Cost Ratio $\delta$ | (R&D Cost)/(Total Assets) |
| | Number of Inventors | (Calculated Based on "Inventor" Column of Laid-Open Publications) |
| | Ratio of Inventors | (Number of Inventors)/(Number of Employees) |
| | R&D Cost per Inventor | (R&D Cost)/(Number of Inventors) |
| (PA) Patent Application Related Items | Number of Patent Applications | (Joint Application is Recorded as One Application) |
| | Number of Claims Filed | (Sum of Number of Claims of Laid-Open Publications) |
| | Number of Claims per Patent Application | (Number of Claims Filed)/(Number of Patent Applications) |
| | Number of application per Inventor | (Number of Patent Applications (Other Than Joint Applications))/(Number of Inventors) |
| | Number of Claims per Inventor (Patent Application) | (Number of Claims Filed (Other Than Joint Applications))/(Number of Inventors) |
| | Number of Joint Applications | (Number of Joint Applications Among Patent Applications Filed) |
| | Joint Filing Ratio | (Number of Joint Applications)/(Number of Patent Applications) |
| | Number of Applicants in Joint | (Number of Joint Applicants in Joint Applications) |
| | Patent Application Stock | (Cumulative Number of Patent Applications) |
| (PB) Examination Request Related Items | Number of Examination Requests | (Number of Examination Requests Filed) |
| | Years to Examination Request (Average) | [ $\Sigma$ (Date of Examination Request - Filing Date)]/[(Number of Examination Requests)×(Annual Number of Days)] |
| | Examination Request Ratio | (Examination Request Ratio Pertaining to Number of Patent Applications of Each Year) |
| | Cumulative Number of Examination Requests | (Cumulative Number of Examination Requests) |

"PATENT QUARTERLY JOURNAL" INDEX LIST OF ENTERPRISE VALUE EVALUATION SYSTEM

B: R&D and Patent Related Index (2)

| Index Group | Index | Formula |
|---|---|---|
| (PT) Patent Acquisition (Registration) Related Items | Number of Patents Granted | (Number of Patents Granted) |
| | Number of Claims Registered | (Number of "Claims" in Registered Gazette) |
| | Years to Patent Granted (Average) | { Σ (Patent Registration Date - Patent Filing Date)}/{(Number of Patents Granted)×(Annual Number of Days)} |
| | Patent Granted Ratio to Number of Applications | (Number of Patents Granted Each Year)/(Number of Patent Applications Filed Each Year) |
| | Patent Granted Stock | (Patent Granted Stock at End of Each Year) |
| | Patent Granted Ratio to Number of Examination Requests | (Number of Patents Granted Each Year)/(Number of Examination Requests Filed Each Year) |
| | Patent Granted Stock Ratio to Examination Request Stock | (Patent Granted Stock)/(Cumulative Number of Examination Requests) |
| | Number of Effective Patents Granted | (Number of Patents Granted Each Year) - (Number of Patents Invalidated Among Patent Registrations Each Year) |
| (PP) Patent Productivity | Patent Application Productivity | (Number of Claims of Patent Applications in a year)/(R&D Cost in a previous year) |
| | Examination Request Productivity | Correction of (Patent Application Productivity). (Patent Application Productivity) × (Estimated Examination Request Ratio) (Estimated Examination Request Ratio: Sought Based on Number of Examination Requests for Previous Applications in which the term for Examination Request is expired.) |
| | Patent Granted Productivity | Correction of (Patent Application Productivity). (Patent Application Productivity) × (Estimated Registration Ratio) (Estimated Registration Ratio: Sought Based on Number of Registrations of Previous Applications, Lapsed Years, Average Required Years to Patent Granted) |
| (PS) Patent Stock Related Items | Total Number of Effective Patents | (Patent Granted Stock) - (Patent Invalidation Stock) |
| | Patent Granted Renewal Ratio | (Total Number of Effective Patents)/(Patent Granted Stock) |
| | Years to Renewal Patent Granted Expiration (Average) | { Σ (Scheduled Invalidation Date of Each Patent of the Total Number of Effective Patents - Year End)} /{(Total Number of Effective Patents) × (Annual Number of Days)} |
| | Patent Stock Index | (Total Number of Effective Patents) × (Years to Renewal Patent Granted Expiration (Average)) |
| | Total Patent Assets | {(R&D Cost)/(Number of Patents Granted)} ×(Total Number of Effective Patents) |

EP 1 688 874 A1

FIG. 8

FIG. 9

EP 1 688 874 A1

"PATENT QUARTERLY JOURNAL" INDEX LIST OF ENTERPRISE VALUE EVALUATION SYSTEM

C: Patent Portfolio Related Index

| Index Group | Index | Formula |
|---|---|---|
| (PAP) Patent Application Portfolio analysis | Patent Application Portfolio analysis | (Power of Number of Claims Share Per Technical Field)　　(Share: Share of Each Technical Field in an Enterprise or Share of each Enterprise in All Enterprises in a Technical Field) |
| | Patent Diversification Index (PDI) | $[1 - \Sigma(\text{Share of Each Technical Field in an Enterprise})^2]$ |
| | Patent Competitive Position Index (PCPI) | $\Sigma[\{\Sigma (\text{SEI Index Per Technical Field})\} \times (\text{Share of Each Company Per Technical Field})] \times (1 + \text{Excess Growth Rate})$ |
| | Average Patent Competitive Position Index (Average PCPI) | (Patent Competitive Position Index (PCPI))/(Number of Technical Fields covered by Company's Patent Applications (Average in 3 Years)) |
| (PKA) Characteristic Keywords | Characteristic Keywords | (Selected Keywords Having an Appearance Frequency That is Not Large in All Patent Publications and That is Large in Patent Publications of the Same Company) |
| | Number of Characteristic Keywords | (Representation of Character of an Enterprise by the Number of Keywords under a Constant Condition of Selecting the Characteristic Keywords) |
| (PSI) Patent Similarity Analysis | Patent Similarity Index | (Ratio of Patent Publications Having the Keyword of the Subject Patent Publication within a Population) |
| | Patent Similarity Index to the Same Company (PSIself) | (Patent Similarity Index (PSI) When the Population is the Same Company's Patent Publications) |
| | Patent Similarity Index to All Companies (PSIall) | (Patent Similarity Index (PSI) When the Population is All Patent Publications Including the Other Companies' Patent Publications) |
| | Normal Patent Publication | (Patent Publications Having Significantly Large PSIall) |
| | Exceptional Patent Publication | (Patent Publications Having Significantly Small PSIall) |

FIG. 10

PATENT STOCK RELATED INDEXES
(ELECTRICAL EQUIPMENT)

| NAME OF ENTERPRISE | TOTAL NUMBER OF EFFECTIVE PATENTS (PSTE) | TOTAL EFFECTIVE PATENT REMAINING RATIO (PSRR) | AVERAGE REMAINING YEARS OF TOTAL EFFECTIVE PATENTS (PSAR) | PATENT STOCK INDEX (PSIN) |
|---|---|---|---|---|
| MS | 39,984 | 87.7 | 8.3 | 333,290 |
| SN | 15,465 | 98.7 | 7.0 | 108,793 |
| HT | 23,139 | 74.6 | 7.3 | 169,696 |
| TS | 22,846 | 84.7 | 7.7 | 176,846 |
| MB | 17,676 | 78.0 | 8.4 | 147,971 |
| FJ | 14,637 | 76.3 | 7.7 | 111,992 |
| NC | 37,802 | 74.6 | 10.9 | 412,672 |
| SY | 13,109 | 87.1 | 9.0 | 117,887 |
| SH | 11,968 | 95.3 | 9.3 | 111,303 |
| PI | 1,552 | 80.8 | 6.7 | 10,357 |

FIG. 11

PATENT STOCK RELATED INDEXES
(CHEMICAL)

| NAME OF ENTERPRISE | TOTAL NUMBER OF EFFECTIVE PATENTS (PSTE) | TOTAL EFFECTIVE PATENT REMAINING RATIO (PSRR) | AVERAGE REMAINING YEARS OF TOTAL EFFECTIVE PATENTS (PSAR) | PATENT STOCK INDEX (PSIN) |
|---|---|---|---|---|
| MK | 4,148 | 89.3 | 6.9 | 28,764 |
| MT | 4,497 | 74.3 | 7.3 | 33,009 |
| SE | 2,786 | 80.7 | 8.6 | 24,003 |
| SU | 2,135 | 74.2 | 7.5 | 16,112 |
| KF | 1,106 | 82.0 | 7.8 | 8,668 |
| AK | 3,089 | 90.2 | 7.5 | 23,094 |
| HK | 906 | 71.2 | 8.3 | 7,557 |
| DN | 1,328 | 92.5 | 6.9 | 9,103 |
| KO | 3,608 | 89.2 | 9.5 | 34,227 |
| SK | 2,684 | 90.3 | 9.6 | 25,715 |

FIG. 12

PATENT STOCK INDEX – TOTAL NUMBER OF EFFECTIVE PATENTS
(CHEMICAL)
$y = 7.6449x + 928.97$

FIG. 13

PATENT STOCK INDEX – TOTAL NUMBER OF EFFECTIVE PATENTS
(ELECTRICAL EQUIPMENT)
$y = 9.6841x - 21836$

FIG. 14

SALES VOLUME – PATENT STOCK INDEX
(CHEMICAL, ELECTRICAL EQUIPMENT)
$y = 388.18x^{0.732}$

FIG. 15

```
        ┌──────────────────┐
        │      START       │
        └──────────────────┘
                 │      ╭─ S501
        ┌──────────────────┐
        │ SELECT ENTERPRISE FOR    │
        │ ENTERPRISE VALUE EVALUATION │
        └──────────────────┘
                 │      ╭─ S502
        ┌──────────────────┐
        │ SELECT MENU FOR ENTERPRISE │
        │   VALUE EVALUATION       │
        └──────────────────┘
                 │      ╭─ S503
              ◇ SELECT COMBINATION ◇
          ┌──────┴───────────────┴──────┐
```

| S604 | S504 |
|---|---|
| ACQUIRE MANAGEMENT-FINANCE INFORMATION | ACQUIRE PATENT INFORMATION |
| S605 | S505 |
| CALCULATE MANAGEMENT-FINANCE INFORMATION | CALCULATE PATENT INFORMATION |
| S606 | S506 |
| ORGANIZE CALCULATION RESULT OF MANAGEMENT-FINANCE INFORMATION | ORGANIZE CALCULATION RESULT OF PATENT INFORMATION |

```
                 │      ╭─ S507
        ┌──────────────────┐
        │   CREATE GRAPH   │
        └──────────────────┘
                 │      ╭─ S508
        ┌──────────────────┐
        │   OUTPUT GRAPH   │
        └──────────────────┘
                 │      ╭─ S509
        ┌──────────────────┐
        │ DETERMINE ENTERPRISE VALUE │
        └──────────────────┘
                 │
        ┌──────────────────┐
        │       END        │
        └──────────────────┘
```

FIG. 16

EP 1 688 874 A1

ENTERPRISE VALUE EVALUATION MENU (1)

SELECT INDEXES IN THE WINDOWS BELLOW

| BACK |
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ■ | | |
| (M) Market evaluation related index | ☐ | (PP) Patent productivity index | ☐ | | |
| (PE) Patent profitability index | ☐ | (PS) Patent stock related index | ☐ | | |

FIG. 17

EP 1 688 874 A1

ENTERPRISE VALUE EVALUATION MENU (3)

SELECT INDEXES IN THE WINDOWS BELLOW

| BACK |
| SET |

| BUSINESS, PROFIT AND MARKET VALUE | R&D AND PATENT | PATENT PORTFOLIO |
|---|---|---|

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ■ | Number of patent registrations | |
| (M) Market evaluation related index | ☐ | (PP) Patent productivity index | ☐ | Number of claims registered | |
| (PE) Patent profitability index | ☐ | (PS) Patent stock related index | ☐ | Average years required for registration | |
| | | | | ☐ Patent registration ratio | |
| | | | | ☐ Cumulative number of patent registrations | |
| | | | | ☐ Patent allowance ratio | |
| | | | | ☐ Cumulative patent allowance ratio | |
| | | | | ☐ Number of effective patents | |

FIG. 18

EP 1 688 874 A1

ENTERPRISE VALUE EVALUATION MENU (1)

SELECT INDEXES IN THE WINDOWS BELLOW

| BACK |
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management–finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ■ | | |

FIG. 19

EP 1 688 874 A1

## ENTERPRISE VALUE EVALUATION MENU (3)

SELECT INDEXES IN THE WINDOWS BELLOW

| BACK |
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management–finance analysis index | ☐ | (PA) Patent application related index | ☐ | (PKA) Characteristic keyword list | ☐ |
| (C) Profit related index | ☐ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | Total number of effective patents | ☐ |
| | | | | Total effective patent remaining ratio | ☐ |
| | | | | Average remaining years of total effective patent | ☐ |
| | | | | ■ Patent stock index | |

FIG. 20

EP 1 688 874 A1

ENTERPRISE VALUE EVALUATION MENU (1)

SELECT INDEXES IN THE WINDOWS BELLOW

| BACK |
| SET |

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | ■ | (PB) Examination request related index | ☐ | (PSI) Patent similarity analysis | ☐ |
| (D) Excess profit analysis index | ☐ | (PT) Patent acquisition (registration) related index | ☐ | | |
| (M) Market evaluation related index | ☐ | (PP) Patent productivity index | ☐ | | |
| (PE) Patent profitability index | ☐ | (PS) Patent stock related index | ☐ | | |

FIG. 21

EP 1 688 874 A1

ENTERPRISE VALUE EVALUATION MENU (2)

| BACK |
| SET |

SELECT INDEXES IN THE WINDOWS BELLOW

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | (PKA) Characteristic keyword list | ☐ |
| (C) Profit related index | | ■ Sales volume | ☐ | (PSI) Patent similarity analysis | ☐ |
| (D) Excess profit analysis index | | ☐ Value added amount | ☐ | | |
| (M) Market evaluation related index | | ☐ GBP | ☐ | | |
| (PE) Patent profitability index | | ☐ EBITDA | ☐ | | |
| | | ☐ Operating profit | | | |
| | | ☐ Net operating profit | | | |
| | | ☐ Patent royalty income | | | |
| | | ☐ ROA. $\alpha$ | | | |
| | | ☐ ROA. $\beta$ | | | |
| | | ☐ ROA. $\gamma$ | | | |
| | | ☐ ROA. $\delta$ | | | |
| | | ☐ EOIA | | | |
| | | ☐ ROIA | | | |

FIG. 22

ENTERPRISE VALUE EVALUATION
INPUT CONDITION SETTING (1)

BACK
SET

SELECT CONDITIONS IN THE WINDOWS BELLOW

TARGET DOCUMENT

| Unexamined patents | ■ |
| Registered patents | ■ |
| Utility models | ☐ |
| Academic documents | ☐ |

DATA READ

| Internal DB1 | ■ |
| Internal DB2 | ☐ |
| JPO IPDL | ☐ |
| PATOLIS | ☐ |
| Other commercially available DB1 | ☐ |
| Other commercially available DB2 | ☐ |
| FD | ☐ |
| CD | ☐ |
| MO | ☐ |
| DVD | ☐ |
| Others | ☐ |

FIG. 23

ENTERPRISE VALUE EVALUATION
INPUT CONDITION SETTING (2)

BACK
SET

SELECT CONDITIONS IN THE WINDOWS BELLOW

TARGET

| All industries | |
| Industry | Food | ☐ |
| Enterprise | Ceramic | ☐ |
| Other unit | Steel, nonferrous and metal | ☐ |
| | Machinery and shipbuilding | ☐ |
| | Electrical equipment | ■ |
| | Automobile & transport machine | ☐ |
| | Fabric, pulp and paper | ☐ |
| | Precision equipment | ☐ |
| | Other manufacturing | ☐ |
| | Construction | ☐ |
| | Information & telecommunication | ☐ |
| | Electricity and gas | ☐ |
| | Chemical | ☐ |
| | Service | ☐ |
| | Pharmaceutical | ☐ |

TARGET

| Industry | ☐ |
| Enterprise | ☐ |
| Enterprise | |
| Other unit | |

Company name

Company code

Applicant code

Search

FIG. 24

### ENTERPRISE VALUE EVALUATION
### OUTPUT CONDITION SETTING

| BACK |
|------|
| SET  |

SELECT CONDITIONS IN THE WINDOWS BELLOW

#### MAP POSITION

| | |
|---|---|
| 1 map | ■ |
| 2 maps | ☐ |
| 1 data sheet | ☐ |
| 2 data sheets | ☐ |
| 1 map with data | ☐ |
| 2 maps with data | ☐ |
| 1 map with comment | ☐ |
| 2 maps with comment | ☐ |
| 1 map with data and comment | ☐ |
| 2 maps with data and comment | ☐ |

#### OUTPUT DATA

| | | |
|---|---|---|
| Patent application productivity | none | ☐ |
| Examination request productivity | top 5 | ☐ |
| Patent registration productivity | top 10 | ☐ |
| COMMENT | top 15 | ☐ |
| (free entry) | top 20 | ■ |
| | numerical input | ☐ |

FIG. 25

ENTERPRISE VALUE EVALUATION MENU (1)

SELECT INDEXES IN THE WINDOWS BELLOW

BACK
SET

BUSINESS, PROFIT AND MARKET VALUE

- (A) Investment index ■
- (B) Management-finance analysis index ☐
- (C) Profit related index ☐
- (D) Excess profit analysis index ☐
- (M) Market evaluation related index ☐
- (PE) Patent profitability index ☐

R&D AND PATENT

- (R) Research and development related index ☐
- (PA) Patent application related index ☐
- (PB) Examination request related index ☐
- (PT) Patent acquisition (registration) related index ☐
- (PP) Patent productivity index ☐
- (PS) Patent stock related index ☐

PATENT PORTFOLIO

- (PAP) Patent application portfolio analysis ☐
- (PKA) Characteristic keyword list ☐
- (PSI) Patent similarity analysis ☐

FIG. 26

EP 1 688 874 A1

ENTERPRISE VALUE EVALUATION MENU (2)

| BACK |
| SET |

SELECT INDEXES IN THE WINDOWS BELLOW

| BUSINESS, PROFIT AND MARKET VALUE | R&D AND PATENT | | PATENT PORTFOLIO | |
|---|---|---|---|---|
| (A) Investment index | ☐ Facility investment amount | ☐ | (PAP) Patent application portfolio analysis | ☐ |
| (B) Management-finance analysis index | ☐ R&D cost | ☐ | (PKA) Characteristic keyword list | ☐ |
| (C) Profit related index | ■ Investment trend index | ☐ | (PSI) Patent similarity analysis | ☐ |
| (D) Excess profit analysis index | ☐ | (PT) Patent acquisition (registration) related index | ☐ | |
| (M) Market evaluation related index | ☐ | (PP) Patent productivity index | ☐ | |
| (PE) Patent profitability index | ☐ | (PS) Patent stock related index | ☐ | |

FIG. 27

EP 1 688 874 A1

ENTERPRISE VALUE EVALUATION MENU (2)

BACK
SET

SELECT INDEXES IN THE WINDOWS BELLOW

BUSINESS, PROFIT AND MARKET VALUE

R&D AND PATENT

PATENT PORTFOLIO

(A) Investment index ☐

(B) Management–finance analysis index ☐

(C) Profit related index ☐

(D) Excess profit analysis index ☐

(M) Market evaluation related index ☐

(PE) Patent profitability index ☐

(R) Research and development related index ☐

(PA) Patent application related index ■

(PB) Examination request related index ☐

(PT) Patent acquisition (registration) related index ☐

(PP) Patent productivity index ☐

(PS) Patent stock related index ☐

(PAP) Patent application portfolio analysis ☐

(PKA) Characteristic keyword list ☐

(PSI) Patent similarity analysis ☐

FIG. 28

EP 1 688 874 A1

ENTERPRISE VALUE EVALUATION MENU (3)

SELECT INDEXES IN THE WINDOWS BELLOW

BACK
SET

| BUSINESS, PROFIT AND MARKET VALUE | | R&D AND PATENT | | PATENT PORTFOLIO | |
|---|---|---|---|---|---|
| (A) Investment index | ☐ | (R) Research and development related index | ☐ | (PAP) Patent application portfolio analysis | ☐ |
| (B) Management-finance analysis index | ☐ | (PA) Patent application related index | ☐ | Number of patent applications | ☐ |
| (C) Profit related index | ☐ | (PB) Examination request related index | ■ | Number of claims filed | ☐ |
| (D) Excess profit analysis index | ☐ | (PT) Patent acquisition (registration) related index | ☐ | Number of claims per application | |
| (M) Market evaluation related index | ☐ | (PP) Patent productivity index | ☐ | Number of applications per inventor | |
| (PE) Patent profitability index | ☐ | (PS) Patent stock related index | ☐ | Number of claims filed per inventor | |
| | | | | Number of joint applications | |
| | | | | Ratio of joint applications | |
| | | | | ☐ Joint applicants | |
| | | | | Total number of applications | |

<div align="center">

**INTERNATIONAL SEARCH REPORT**

</div>

| International application No. |
|---|
| PCT/JP2004/003545 |

**A. CLASSIFICATION OF SUBJECT MATTER**
Int.Cl⁷ G06F17/60

According to International Patent Classification (IPC) or to both national classification and IPC

**B. FIELDS SEARCHED**

Minimum documentation searched (classification system followed by classification symbols)
Int.Cl⁷ G06F17/60

Documentation searched other than minimum documentation to the extent that such documents are included in the fields searched

| | | | | |
|---|---|---|---|---|
| Jitsuyo Shinan Koho | 1922–1996 | Toroku Jitsuyo Shinan Koho | 1994–2004 |
| Kokai Jitsuyo Shinan Koho | 1971–2004 | Jitsuyo Shinan Toroku Koho | 1996–2004 |

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| A | JP 2002-92228 A (Patolis Corp.), 29 March, 2002 (29.03.02), Abstract (Family: none) | 1-46 |
| A | WO 00/60495 A2 (AURIGIN SYSTEMS INC.), 12 October, 2000 (12.10.00), Abstract & JP 2003-527647 A | 1-46 |
| A | JP 2001-92825 A (NEC Corp.), 06 April, 2001 (06.04.01), Abstract & TW 479181 B | 1-46 |

☐ Further documents are listed in the continuation of Box C.  ☐ See patent family annex.

| | |
|---|---|
| * Special categories of cited documents: | "T" later document published after the international filing date or priority date and not in conflict with the application but cited to understand the principle or theory underlying the invention |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 27 April, 2004 (27.04.04) | 18 May, 2004 (18.05.04) |

| Name and mailing address of the ISA/ | Authorized officer |
|---|---|
| Japanese Patent Office | |
| Facsimile No. | Telephone No. |

Form PCT/ISA/210 (second sheet) (January 2004)